(19) Europäisches Patentamt / European Patent Office / Office européen des brevets

(11) **EP 3 876 584 B1**

(12) **EUROPEAN PATENT SPECIFICATION**

(45) Date of publication and mention
of the grant of the patent:
**08.07.2026 Bulletin 2026/28**

(21) Application number: **19878072.8**

(22) Date of filing: **28.10.2019**

(51) International Patent Classification (IPC):
*H04W 24/08* (2009.01)   *H04W 24/10* (2009.01)
*H04L 5/00* (2006.01)

(52) Cooperative Patent Classification (CPC):
**H04L 5/0051; H04B 17/328; H04W 24/10**

(86) International application number:
**PCT/CN2019/113590**

(87) International publication number:
**WO 2020/088386 (07.05.2020 Gazette 2020/19)**

(54) **METHOD AND DEVICE FOR MEASURING SIGNAL QUALITY PARAMETERS**

VERFAHREN UND VORRICHTUNG ZUR MESSUNG VON SIGNALQUALITÄTSPARAMETERN

PROCÉDÉ ET DISPOSITIF DE MESURE DE PARAMÈTRES DE QUALITÉ DE SIGNAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.11.2018   CN 201811303176**

(43) Date of publication of application:
**08.09.2021 Bulletin 2021/36**

(73) Proprietor: **VIVO MOBILE COMMUNICATION CO.,
LTD.
Dongguan, Guangdong 523860 (CN)**

(72) Inventors:
• **YANG, Yu
  Dongguan, Guangdong 523860 (CN)**
• **SUN, Peng
  Dongguan, Guangdong 523860 (CN)**

(74) Representative: **Murgitroyd & Company
165-169 Scotland Street
Glasgow G5 8PL (GB)**

(56) References cited:
**EP-A1- 3 276 849      EP-A1- 3 276 851
CN-A- 102 594 526      CN-A- 103 036 663
CN-A- 108 540 178      US-A1- 2017 331 609
US-A1- 2018 034 612**

• **INTEL CORPORATION: "Simultaneous Tx and Rx
of channels and RS", R1-1808671, 3GPP TSG
RAN WG1 MEETING #94, 24 August 2018
(2018-08-24), XP051516047**

**Description**

**CROSS-REFERENCE TO RELATED APPLICATION**

This application claims priority to Chinese Patent Application No. 201811303176.9 filed in China on November 2, 2018.

**TECHNICAL FIELD**

The present disclosure relates to the field of communications technologies, and more specifically, to a method and a device for measuring signal quality parameters.

**BACKGROUND**

To support access of a larger quantity of users, a multiple-input multiple-output (Multiple-Input Multiple-Output, MIMO) technology with a larger scale and more antenna ports, such as a massive MIMO (Massive MIMO) technology using a large-scale antenna array, is introduced into a mobile communications system. Beamforming is a key technology for implementing multi-user MIMO (Multi-User MIMO, MU-MIMO) in massive MIMO, and can generate a directional beam by adjusting a weighting coefficient of each element in an antenna array. Different beams obtained through beamforming have different quality, signal quality parameters need to be measured, and an appropriate beam needs to be selected based on a measurement result to send a signal or a channel.

During beam measurement, a network device configures, for a terminal device (User Equipment, UE), a reference signal resource set (Reference Signal resource set, RS resource set) used for beam measurement. The UE measures a layer 1 (Layer 1, L1) reference signal received power (Reference Signal Receiving Power, RSRP) corresponding to each beam link, and reports related information of a plurality of beams with best measurement results based on the L1-RSRP to the network device, for the network device to select a beam for sending a signal or a channel to the UE. However, the beam selected by the network device based on the L1-RSRP is not ideal, and there is a disadvantage of low throughput or high block error rate during sending of the signal or the channel.

US2017331609A1 discloses an interference measurement indication method, an interference measurement method, a related device, and a communication system. The interference measurement indication method includes: transmitting by a base station, at least one piece of first-type channel state information reference signal CSI-RS configuration signaling to a user equipment UE, where the at least one piece of first-type CSI-RS configuration signaling indicates a first resource set used for CSI-RS transmission; and transmitting, by the base station, at least one piece of second-type CSI-RS configuration signaling to the UE, where a second resource set used for CSI-RS transmission, which is indicated by the at least one piece of second-type CSI-RS configuration signaling, is a subset of the first resource set.

EP3276849A1 discloses a base station using a large-scale antenna transmits, to a terminal, reference signal resource configuration information including multiple pieces of reference signal configuration information and reference signal port information, for transmission of a reference signal, and transmits the reference signal to the terminal using some or all of channel measurement resources indicated by the multiple pieces of reference signal configuration information and the reference signal port information included in the reference signal resource configuration information. In this case, the channel measurement resources may correspond to antenna ports, the number of which is indicated by a combination of the multiple pieces of reference signal configuration information and the reference signal port information.

EP3276851A1 discloses a method and apparatus, from the perspective of the UE, for reporting channel state information (CSI). Preferably, the method includes a UE being configured with at least two CSI-RS (Channel State Information-Reference Signal) resources. In addition, the method includes the UE performing measurements on the at least two CSI-RS resources. The method also includes the UE generating multiple CSI according to measurements on the at least two CSI-RS resources, wherein at least one CSI corresponds to measurements on more than one CSI-RS resource.

**SUMMARY**

Embodiments of the present disclosure provide a method and a device for measuring signal quality parameters, for a network device to select an ideal beam used to send a signal or a channel to UE, to improve a throughput and reduce a block error rate.

According to a first aspect, a method for measuring signal quality parameters is provided, and applied to a terminal device, which is defined in claim 1.

According to a second aspect, a method for measuring signal quality parameters is provided, and applied to a network device, which is defined in claim 8.

According to a third aspect, a terminal device is provided, which is defined in claim 11.

According to a fourth aspect, a network device is provided, which is defined in claim 14.

In the embodiments of the present disclosure, the signal parameter of the target signal quality parameter may be determined based on the at least one first reference signal resource in the first reference signal resource set for measuring a plurality of signal quality parameters, and the first interference parameter of the target signal quality parameter may be determined based on the at least one second reference signal resource in the first reference signal resource set. Therefore, a measurement result that can better reflect channel quality of beams corresponding to a plurality of signal quality parameters can be obtained, so that the network device can accordingly determine an ideal beam for sending a signal or a channel to the terminal device, thereby improving a throughput and reducing a block error rate.

## BRIEF DESCRIPTION OF DRAWINGS

To describe the technical solutions in the embodiments of the present disclosure or the related art more clearly, the following briefly describes the accompanying drawings required for describing the embodiments or the related art. Apparently, the accompanying drawings in the following description show merely some embodiments recorded in the present disclosure, and a person of ordinary skill in the art may still derive other drawings from these accompanying drawings without creative efforts.

FIG. 1 is a first schematic flowchart of a method for measuring signal quality parameters according to an embodiment of the present disclosure;

FIG. 2 is a second schematic flowchart of a method for measuring signal quality parameters according to an embodiment of the present disclosure;

FIG. 3 is a third schematic flowchart of a method for measuring signal quality parameters according to an embodiment of the present disclosure;

FIG. 4 is a first schematic flowchart of another method for measuring signal quality parameters according to an embodiment of the present disclosure;

FIG. 5 is a second schematic flowchart of another method for measuring signal quality parameters according to an embodiment of the present disclosure;

FIG. 6 is a first schematic structural diagram of a terminal device 600 according to an embodiment of the present disclosure;

FIG. 7 is a second schematic structural diagram of a terminal device 600 according to an embodiment of the present disclosure;

FIG. 8 is a third schematic structural diagram of a terminal device 600 according to an embodiment of the present disclosure;

FIG. 9 is a first schematic structural diagram of a network device 900 according to an embodiment of the present disclosure;

FIG. 10 is a second schematic structural diagram of a network device 900 according to an embodiment of the present disclosure;

FIG. 11 is a schematic structural diagram of a terminal device 1100 according to an embodiment of the present disclosure; and

FIG. 12 is a schematic structural diagram of a network device 1200 according to an embodiment of the present disclosure.

## DESCRIPTION OF EMBODIMENTS

In order to help a person skilled in the art better understand the technical solutions of the present disclosure, the following clearly and completely describes the technical solutions in the embodiments of the present disclosure with reference to the accompanying drawings in the embodiments of the present disclosure. Apparently, the described embodiments are merely some but not all of the embodiments of the present disclosure. All other embodiments obtained by a person of ordinary skill in the art based on the embodiments of the present disclosure without creative efforts shall fall within the protection scope of the present disclosure.

It should be understood that, the technical solutions of the embodiments of the present disclosure may be applied to various communications systems, for example: a global system for mobile communications (Global System of Mobile communication, GSM), a code division multiple address (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunication System, UMTS), a Worldwide Interoperability for Microwave Access (Worldwide Interoperability for Microwave Access, WiMAX) communications system, a 5G system, or a new radio (New Radio, NR) system.

A terminal device (User Equipment, UE), which may also be referred to as a mobile terminal (Mobile Terminal), a mobile terminal device, or the like, may communicate with one or more core networks through a radio access network (for example, a Radio Access Network, RAN). The terminal device may be a mobile terminal, such as a mobile phone (or referred to as a "cellular" phone), and a computer that has a mobile terminal. The computer that has a mobile terminal may be, for example, a portable, pocket-sized, handheld, computer-built in, or in-vehicle mobile apparatus. These mobile apparatuses exchange language and/or data with the radio access network.

A network device is an apparatus deployed in the radio access network and configured to provide a signal quality parameter measurement function. The network device may be a base station. The base station may be a base transceiver station (Base Transceiver Station, BTS) in GSM or CDMA, or may be a NodeB (NodeB) in WCDMA, or may be an evolved NodeB (evolutional NodeB, eNB, or e-NodeB) in LTE, a 5G gNodeB (gNB), or a network side device in a subsequent evolved communications system. However, the wording does not constitute a limitation on the protection scope of the present disclosure.

It should be noted that, during description of specific embodiments, sequence numbers of processes do not mean execution sequences. The execution sequences of the processes should be determined according to functions and internal logic of the processes, and should not be construed as any limitation on the implementation processes of the embodiments of the present disclosure.

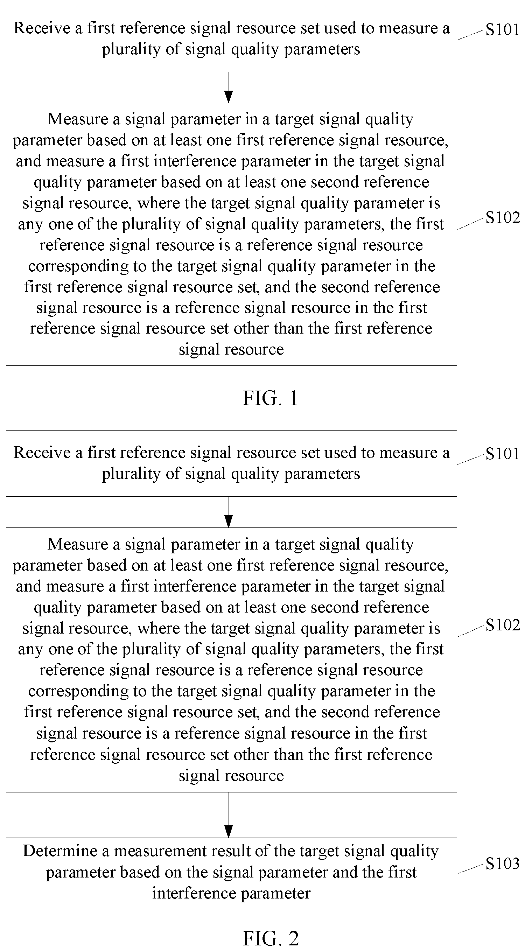

A method for measuring signal quality parameters that is applicable to a terminal device is first described below with reference to FIG. 1 to FIG. 3.

FIG. 1 shows a method for measuring signal quality parameters according to an embodiment of the present disclosure, and the method is applicable to a terminal device. As shown in FIG. 1, the method may include the following steps.

Step 101: Receive a first reference signal resource set used to measure a plurality of signal quality parameters.

For ease of description, in this embodiment of this specification, the signal quality parameter may be represented by a signal-to-interference-plus-noise ratio (Signal to Interference plus Noise Ratio, SINR). In this case, the first reference signal resource set received in step 101 may be used to measure a plurality of signal-to-interference-plus-noise ratios. However, it should be noted that, the signal-to-interference-plus-noise ratio in this embodiment of this specification is different from a signal-to-interference-plus-noise ratio in the related art.

In an example, the plurality of signal-to-interference-plus-noise ratios (a plurality of signal quality parameters) may be a plurality of signal-to-interference-plus-noise ratios corresponding to a plurality of to-be-measured beams of the network device. Usually, one to-be-measured beam corresponds to one signal-to-interference-plus-noise ratio. It may be understood that, after the terminal device obtains measurement results of the plurality of signal-to-interference-plus-noise ratios through measurement, the network device may select, from the to-be-measured beams based on the measurement results of the plurality of signal-to-interference-plus-noise ratios that are reported by the terminal device and other related information (for details, refer to the following description) of the plurality of signal-to-interference-plus-noise ratios, an ideal beam for sending a signal or a channel to the terminal device.

The first reference signal resource set (Reference Signal resource set, RS resource set) includes at least two reference signal resources (Reference Signal resource, RS resource).

The reference signal resources included in the first reference signal resource set may include, but is not limited to, a synchronization signal block (Synchronization Signal Block, SSB) or a channel state information reference signal (Channel State Information-Reference Signal, CSI-RS).

Optionally, the reference signal resources included in the first reference signal resource set may be CSI-RSs. This is because compared to signal parameter measurement based on an SSB, a manner of measuring a signal parameter based on a CSI-RS usually allows fine measurement of a to-be-measured beam, and enables a signal parameter obtained through measurement to be more accurate. This is beneficial to multi-beam and multi-user scheduling on a network side.

Step 102: Measure a signal parameter in a target signal quality parameter based on at least one first reference signal resource, and measure a first interference parameter in the target signal quality parameter based on at least one second reference signal resource, where the target signal quality parameter is any one of the plurality of signal quality parameters, the first reference signal resource is a reference signal resource corresponding to the target signal quality parameter in the first reference signal resource set, and the second reference signal resource is a reference signal resource in the first reference signal resource set other than the first reference signal resource.

In order to clearly understand functions to be implemented in step 102, the following examples are used for illustration.

It is assumed that the plurality of to-be-measured beams include a beam 1, a beam 2, and a beam 3, and the plurality of corresponding signal quality parameters that need to be measured are respectively an SINR 1, an SINR 2, and an SINR 3; and the first reference signal resource set includes eight reference signal resources: an RS 1, an RS 2, an RS 3, an RS 4, an RS 5, an RS 6, an RS 7, and an RS 8. The RS 1, the RS 2, and the RS 3 are reference signal resources used to measure signal parameters of the beam 1, that is, the RS 1, the RS 2, and the RS 3 are reference signal resources corresponding to the SINR 1. The RS 4, the RS 5, and the RS 6 are reference signal resources used to measure signal parameters of the beam 2, that is, the RS 4, the RS 5, and the RS 6 are reference signal resources corresponding to the SINR 2. The RS 7 and the RS 8 are reference signal resources used to measure signal parameters of the beam 3, that is, the RS 7 and the RS 8 are reference signal resources corresponding to the SINR 3.

In this case, when the target signal quality parameter is the SINR 1, the RS 1, the RS 2, and the RS 3 are first reference signal resources, and the RS 4, the RS 5, the RS 6, the RS 7, and the RS 8 are second reference signal resources. Correspondingly, a signal parameter in the SINR 1 may be measured based on at least one of the RS 1, the RS 2, and the RS 3, and a first interference parameter in the SINR 1 may be measured based on at least one of the RS 4, the RS 5, the RS 6, the RS 7, and the RS 8.

When the target signal quality parameter is the SINR 2, the RS 4, the RS 5, and the RS 6 are first reference signal resources, and the RS 1, the RS 2, the RS 3, the RS 7, and the RS 8 are second reference signal resources. Correspondingly, a signal parameter in the SINR 2 may be measured based on at least one of the RS 4, the RS 5, and the RS 6, and a first interference parameter in the SINR 2 may be measured based on at least one of the RS 1, the RS 2, the RS 3, the RS 7, and the RS 8.

When the target signal quality parameter is the SINR 3, the RS 7 and the RS 8 are first reference signal resources, and the RS 1, the RS 2, the RS 3, the RS 4, the RS 5, and the RS 6 are second reference signal resources. Correspondingly, a signal parameter in the SINR 3 may be measured based on at least one of the RS 7 and the RS 8, and a first interference parameter in the SINR 3 may be measured based on at least one of the RS 1, the RS 2, the RS 3, the RS 4, the RS 5, and the RS 6.

It is easy to learn from the examples that a reference signal resource of a signal parameter that is used to measure a signal-to-interference-plus-noise ratio may be some or all of first reference signal resources corresponding to the signal-to-interference-plus-noise ratio, and a reference signal resource of a first interference parameter that is used to measure a signal-to-interference-plus-noise ratio may be some or all of second reference signal resources corresponding to the signal-to-interference-plus-noise ratio.

In addition, a reference signal resource of a signal parameter that is used to measure a signal-to-interference-plus-noise ratio may be used to measure a first interference parameter in another signal-to-interference-plus-noise ratio, and a reference signal resource of a first interference parameter that is used to measure a signal-to-interference-plus-noise ratio may be used to measure a signal parameter in another signal-to-interference-plus-noise ratio. For example, the reference signal resources (the RS 1, the RS 2, and the RS 3) used to measure the signal parameter in the SINR 1 may be used to measure the first interference parameter in the SINR 2 or the SINR 3; the reference signal resources (the RS 4, the RS 5, and the RS 6) used to measure the first interference parameter in the SINR 1 may be used to measure the signal parameter in the SINR 2; and so on. Examples are not listed herein.

It can be learned that in this embodiment of this specification, different signal quality parameters in the plurality of signal quality parameters correspond to different first reference signal resources, and a first reference signal resource corresponding to one signal quality parameter may be used as a second reference signal resource corresponding to another signal quality parameter.

The following are examples of specific manners of determining a signal parameter and a first interference parameter of a target signal quality parameter in step 102.

In an example, the measuring a signal parameter in a target signal quality parameter based on at least one first reference signal resource may include: processing a layer 1 (Layer 1, L1) reference signal received power (Reference Signal Receiving Power, RSRP) or L1-RSRPs of the at least one first reference signal resource according to a first preset rule, to obtain the signal parameter of the target signal quality parameter.

When the signal parameter of the target signal quality parameter is to be determined based on a first reference signal resource, specifically, an L1-RSRP of the first reference signal resource may be determined as the signal parameter of the target signal quality parameter. For example, when a signal parameter of an SINR 1 is to be determined based on an RS 1, an L1-RSRP of the RS 1 may be determined as the signal parameter of the SINR 1.

When the signal parameter of the target signal quality parameter is to be determined based on a plurality of first reference signal resources, an average value of L1-RSRPs of the plurality of first reference signal resources, a largest value in L1-RSRPs of the plurality of first reference signal resources, or a weighted sum of L1-RSRPs of the plurality of first reference signal resources may be determined as the signal parameter of the target signal quality parameter. For example, when the signal parameter of the SINR 1 is to be determined based on the RS 1, the RS 2, and the RS 3, an average value of L1-RSRPs of the RS 1, the RS 2, and the RS 3 may be determined as the signal parameter of the SINR 1, or a largest value in L1-RSRPs of the RS 1, the RS 2, and the RS 3 may be determined as the signal parameter of the SINR 1, or a weighted sum of the L1-RSRPs of the RS 1, the RS 2, and the RS 3 may be determined as the signal parameter of the SINR 1.

Certainly, the first preset rule for determining the signal parameter in the target signal quality parameter may further include another manner, and is not limited to the three manners listed in the foregoing examples.

In an example, the measuring a first interference parameter in the target signal quality parameter based on at least one second reference signal resource may include: processing an L1-RSRP or L1-RSRPs of the at least one second reference signal resource according to a second preset rule, to obtain the first interference parameter of the target signal quality parameter.

When the first interference parameter of the target signal quality parameter is to be determined based on a second reference signal resource, specifically, an L1-RSRP of the second reference signal resource may be determined as the first interference parameter of the target signal quality parameter. For example, when a first interference parameter of the SINR 1 is to be determined based on the RS 4, an L1-RSRP of the RS 4 may be determined as the first interference parameter of the SINR 1.

When the first interference parameter of the target signal quality parameter is to be determined based on a plurality of second reference signal resources, in one manner, signal quality parameters corresponding to the plurality of second reference signal resources are first determined, then weighted summation is performed on L1-RSRPs of second reference signal resources corresponding to each signal quality parameter, and finally weighted sums of the L1-RSRPs corresponding to all signal quality parameters are added, to obtain the first interference parameter of the target signal quality parameter. In another manner, signal quality parameters corresponding to the plurality of second reference signal resources are first determined, then L1-RSRPs of second reference signal resources corresponding to each signal quality parameter are averaged, and finally average values of the L1-RSRPs corresponding to all signal quality parameters are added, to obtain the first interference parameter of the target signal quality parameter. In still another manner, signal quality parameters corresponding to the plurality of second reference signal resources are first determined, then a largest L1-RSRP is determined in L1-RSRPs of second reference signal resources corresponding to each signal quality parameter, and finally largest L1-RSRP values corresponding to all signal quality parameters are added, to obtain the first interference parameter of the target signal quality parameter.

Specifically, when the at least one second reference signal resource is all reference signal resources in the first reference signal resource set other than the first reference signal resource, for example, if the target signal quality parameter is the SINR 1, and the at least one second reference signal resource includes the RS 4, the RS 5, the RS 6, the RS 7, and the RS 8, a calculation manner of a first interference parameter of the SINR 1 may be specifically:

$$P_{G1} = (\alpha_{21}P_{RS4} + \alpha_{22}P_{RS5} + \alpha_{23}P_{RS6}) + (\alpha_{31}P_{RS7} + \alpha_{32}P_{RS8}) ,$$

or

$$P_{G1} = (\frac{P_{RS4} + P_{RS5} + P_{RS6}}{3}) + (\frac{P_{RS7} + P_{RS8}}{2}) ,$$

or

$$P_{G1} = P_{RS4} + P_{RS7}$$

where $P_{G1}$ is the first interference parameter of the SINR 1, $P_{RS4}$, $P_{RS5}$, $P_{RS6}$, $P_{RS7}$, and $P_{RS8}$ are respectively L1-RSRPs of the RS 4, the RS 5, the RS 6, the RS 7, and the RS 8, $\alpha_{21}P_{RS4} + \alpha_{22}P_{RS5} + \alpha_{23}P_{RS6}$ is a weighted sum of L1-RSRPs of second reference signal resources corresponding to the SINR 2, $\alpha_{21}$, $\alpha_{22}$, and $\alpha_{23}$, are respectively weighting coefficients corresponding to $P_{RS4}$, $P_{RS5}$, and $P_{RS6}$, $\alpha_{31}P_{RS7} + \alpha_{32}P_{RS8}$ is a weighted sum of L1-RSRPs of second reference signal resources corresponding to the SINR 3, $\alpha_{31}$ and $\alpha_{32}$ are respectively weighting coefficients corresponding to $P_{RS7}$ and $P_{RS8}$, $P_{RS4}$ is the largest L1-RSRP in L1-RSRPs of the RS 4, the RS 5, and the RS 6 corresponding to the SINR 2, and $P_{RS7}$ is the largest L1-RSRP in L1-RSRPs of the RS 7 and the RS 8 corresponding to the SINR 2.

Specifically, when the at least one second reference signal resource is some reference signal resources in the first reference signal resource set other than the first reference signal resource, for example, if the target signal quality parameter is the SINR 1, and the at least one second reference signal resource includes the RS 4, the RS 7, and the RS 8, a calculation manner of a first interference parameter of the SINR 1 may be:

$$P_{G1} = P_{RS4} + (\alpha_{31}P_{RS7} + \alpha_{32}P_{RS8}) ,$$

or

$$P_{G1} = P_{RS4} + \left(\frac{P_{RS7} + P_{RS8}}{2}\right),$$

or

$$P_{G1} = P_{RS4} + P_{RS7}$$

where similarly, the second preset rule for determining the first interference parameter in the target signal quality parameter may further include another manner, and is not limited to the manners listed in the foregoing examples.

By extension, when there are N signal quality parameters (SINRs) that need to be measured, a calculation manner of a first interference parameter of an ith SINR may be:

$$P_{Gi} = \sum_{k=1,k\neq i}^{N} \left(\alpha_{1_k} P_{1_k} + \alpha_{2_k} P_{2_k} + \cdots + \alpha_{n_k} P_{n_k}\right),$$

or

$$P_{Gi} = \sum_{k=1,k\neq i}^{N} \frac{P_{1_k} + P_{2_k} + \cdots + P_{n_k}}{n_k},$$

or

$$P_{Gi} = \sum_{k=1,k\neq i}^{N} \max(P_{1_k}, P_{2_k}, \cdots, P_{n_k})$$

In the three calculation manners, $P_{Gi}$ is the first interference parameter of the ith SINR, $n_k$ is a quantity of the at least one second reference signal resource corresponding to a kth SINR, $\alpha_{1k}$ to $\alpha_{n_k}$ are weighting coefficients, and $P_{1_k}$ to $P_{n_k}$ are L1-RSRPs of the at least one second reference signal resource corresponding to the kth SINR.

In the method for measuring signal quality parameters that is provided in this embodiment of the present invention, the signal parameter of the target signal quality parameter may be determined based on the at least one first reference signal resource in the first reference signal resource set for measuring a plurality of signal quality parameters, and the first interference parameter of the target signal quality parameter may be determined based on the at least one second reference signal resource in the first reference signal resource set. Therefore, a measurement result that can better reflect channel quality of beams corresponding to a plurality of signal quality parameters can be obtained, so that the network device can accordingly determine an ideal beam for sending a signal or a channel to the terminal device, thereby improving a throughput and reducing a block error rate.

Optionally, as shown in FIG. 2, a method for measuring signal quality parameters according to another embodiment of the present disclosure may further include the following step:

Step 103: Determine a measurement result of the target signal quality parameter based on the signal parameter and the first interference parameter.

In an example, a ratio of the signal parameter to the first interference parameter may be determined as the measurement result of the target signal quality parameter. The signal parameter is determined based on a received power or received powers of the at least one first reference signal resource, and the first interference parameter is determined based on a received power or received powers of the at least one second reference signal resource.

Following the example provided above, if the first interference parameter of the ith SINR in the N SINRs may be:

$$P_{Gi} = \sum_{k=1,k\neq i}^{N} \left(\alpha_{1_k} P_{1_k} + \alpha_{2_k} P_{2_k} + \cdots + \alpha_{n_k} P_{n_k}\right),$$

or

$$P_{Gi} = \sum_{k=1,k\neq i}^{N} \frac{P_{1_k} + P_{2_k} + \cdots + P_{n_k}}{n_k},$$

or

$$P_{Gi} = \sum\nolimits_{k=1,k\neq i}^{N} \max(P_{1_k}, P_{2_k}, \cdots, P_{n_k})$$

then, correspondingly, a measurement result of the $i^{th}$ SINR may be respectively:

$$SINR_i = \frac{P_{Xi}}{P_{Gi}} = \frac{P_{Xi}}{\sum\nolimits_{k=1,k\neq i}^{N}(\alpha_{1_k}P_{1_k} + \alpha_{2_k}P_{2_k} + \cdots + \alpha_{n_k}P_{n_k})},$$

or

$$SINR_i = \frac{P_{Xi}}{P_{Gi}} = \frac{P_{Xi}}{\sum\nolimits_{k=1,k\neq i}^{N} \dfrac{P_{1_k} + P_{2_k} + \cdots + P_{n_k}}{n_k}},$$

or

$$SINR_i = \frac{P_{Xi}}{P_{Gi}} = \frac{P_{Xi}}{\sum\nolimits_{k=1,k\neq i}^{N} \max(P_{1_k}, P_{2_k}, \cdots, P_{n_k})}$$

For example, if the target signal quality parameter is the SINR 1, the at least one first reference signal resource includes the RS 1, the at least one second reference signal resource includes the RS 4, the RS 5, the RS 6, the RS 7, and the RS 8, the signal parameter of the SINR 1 is the L1-RSRP of the RS 1, and the first interference parameter of the SINR 1 is $P_{G1} = (\alpha_{21}P_{RS4} + \alpha_{22}P_{RS5} + \alpha_{23}P_{RS6}) + (\alpha_{31}P_{RS7} + \alpha_{32}P_{RS8})$, the measurement result of the SINR 1 may be:

$$SINR_1 = \frac{P_{X1}}{P_{G1}} = \frac{P_{RS1}}{(\alpha_{21}P_{RS4} + \alpha_{22}P_{RS5} + \alpha_{23}P_{RS6}) + (\alpha_{31}P_{RS7} + \alpha_{32}P_{RS8})}$$

For the meaning of each physical symbol, refer to the foregoing description. No repetition is made herein.

In this embodiment of the present disclosure, the measurement result of the target signal quality parameter is determined based on the signal parameter and the first interference parameter of the target signal quality parameter. Therefore, a measurement result that can better reflect channel quality of beams corresponding to a plurality of signal quality parameters can be obtained, so that the network device can accordingly determine an ideal beam for sending a signal or a channel to the terminal device, thereby improving a throughput and reducing a block error rate.

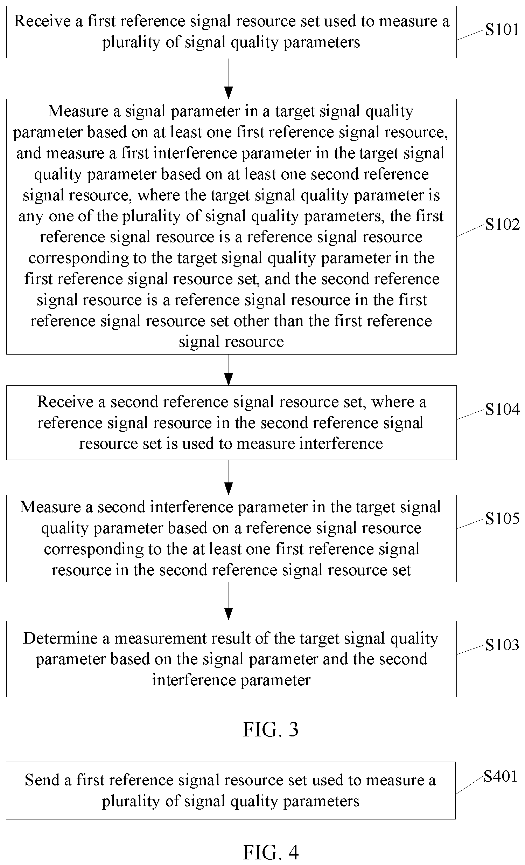

Optionally, as shown in FIG. 3, a method for measuring signal quality parameters according to another embodiment of the present disclosure may further include the following step before step 103:

Step 104: Receive a second reference signal resource set, where a reference signal resource in the second reference signal resource set is used to measure interference.

The reference signal resource in the second reference signal resource set may be a reference signal resource specially used to measure interference. The reference signal resources may not be used to measure a signal parameter.

During actual application, a quantity of reference signal resources included in the second reference signal resource set may be less than or equal to a quantity of reference signal resources included in the first reference signal resource set, and the reference signal resources included in the second reference signal resource set have a correspondence with the reference signal resources included in the first reference signal resource set. Generally, one or more reference signal resources in the first reference signal resource set correspond to only one reference signal resource in the second reference signal resource set.

For example, it is assumed that the first reference signal resource set includes eight reference signal resources: {A1, A2, A3, A4, A5, A6, A7, A8}, and the second reference signal resource set includes three reference signal resources: {B1, B2, B3}. In this case, a correspondence therebetween may be as follows: A1 and A2 correspond to B1, A3 to A7 correspond to B2, A8 corresponds to B3, and so on. Usually, a reference signal resource A and a reference signal resource B that have a correspondence with each other are used to measure an SINR of a same beam.

Step 105: Measure a second interference parameter in the target signal quality parameter based on a reference signal resource corresponding to the at least one first reference signal resource in the second reference signal resource set.

For a process of measuring a second interference parameter in the target signal quality parameter based on a reference signal resource corresponding to the at least one first reference signal resource in the second reference signal resource set, refer to the related art. Details are not described herein again.

Based on this embodiment, step 103 may include: determining the measurement result of the target signal quality parameter based on the signal parameter, the first interference parameter, and the second interference parameter.

In an example, specifically, total interference in the target signal quality parameter may be first determined based on the first interference parameter and the second interference parameter; and then a ratio of the signal parameter to the total interference may be determined as the measurement result of the target signal quality parameter.

If it is assumed that the second interference parameter in the target signal quality parameter that is obtained through measurement in step 105 is IN, it may be obtained by following the foregoing example that the measurement result of the $i^{\text{th}}$ SINR in the N SINRs may be:

$$SINR_i = \frac{P_{Xi}}{P_{Gi}} = \frac{P_{Xi}}{\sum_{k=1,k\neq i}^{N}(\alpha_{1_k}P_{1_k} + \alpha_{2_k}P_{2_k} + \cdots + \alpha_{n_k}P_{n_k}) + IN_i},$$

or

$$SINR_i = \frac{P_{Xi}}{P_{Gi}} = \frac{P_{Xi}}{\sum_{k=1,k\neq i}^{N}\dfrac{P_{1_k} + P_{2_k} + \cdots + P_{n_k}}{n_k} + IN_i},$$

or

$$SINR_i = \frac{P_{Xi}}{P_{Gi}} = \frac{P_{Xi}}{\sum_{k=1,k\neq i}^{N}\max(P_{1_k}, P_{2_k}, \cdots, P_{n_k}) + IN_i}$$

Compared with the embodiment shown in FIG. 2, in the method for measuring signal quality parameters that is provided in this embodiment of the present disclosure, the second interference parameter obtained through measurement based on the reference signal resource used to measure interference is further introduced into the measurement result of the signal quality parameter, so that the measurement result of the signal quality parameter can better reflect channel quality of a beam corresponding to the signal quality parameter, and the network device can accordingly determine an ideal beam for sending a signal or a channel to the terminal device, thereby improving a throughput and reducing a block error rate.

Optionally, based on any one of the foregoing embodiments, the method for measuring signal quality parameters that is provided in this embodiment of the present disclosure may further include: selecting at least one signal quality parameter whose measurement result or measurement results satisfies or satisfy a preset condition from the plurality of target signal quality parameters; and reporting at least one of the following information: the measurement result or the measurement results of the at least one signal quality parameter, an index or indexes of the at least one first reference signal resource corresponding to the at least one signal quality parameter, and a signal parameter or signal parameters of the at least one first reference signal resource corresponding to the at least one signal quality parameter.

In an example, at least one signal quality parameter whose measurement result or measurement results is or are greater than or equal to a preset threshold may be selected from the plurality of signal quality parameters (SINR). Alternatively, the plurality of signal quality parameters are sorted in descending order of measurement results, and at least one signal quality parameter ranking top is selected.

For example, M signal quality parameters are selected, in any one of the foregoing manners, from the N signal quality parameters that need to be measured. Then, measurement results of the M SINRs, an index or indexes of the at least one first reference signal resource corresponding to the M SINRs in step 102, an L1-RSRP or L1-RSRPs of the at least one first reference signal resource corresponding to the M SINRs, and other information related to the M SINRs are reported to the network device, for the network device to determine an ideal beam for sending a signal or a channel to the terminal device.

Based on any one of the foregoing embodiments, the method for measuring signal quality parameters that is provided in this embodiment of the present disclosure further includes: determining a value of a repetition parameter (repetition), where the value is included in configuration information used to configure the first reference signal resource set.

Repetition is a parameter used to determine whether to repeatedly measure a transmit beam of the network device. If the value of repetition is on (on), it indicates that a same transmit beam of the network device is being repeatedly measured. If the value of repetition is off (off), it indicates that a plurality of beams of the network device are being measured in a polling manner.

When the value is off (off), the signal parameter in the target signal quality parameter is measured based on the at least one first reference signal resource, and the first interference parameter in the target signal quality parameter is measured based on the at least one second reference signal resource.

This embodiment of the present disclosure is intended to describe the following content: When the value of repetition is off, the method for measuring signal quality parameters that is provided in this embodiment of the present disclosure is used to measure measurement results of a plurality of signal quality parameters. On the contrary, when the value of repetition is on (on), the method for measuring signal quality parameters that is provided in this embodiment of the present disclosure may not be used for measurement.

It should be noted that, in this embodiment of this specification, the first reference signal resource set, the second reference signal resource set, and the value of repetition value can be configured by using same configuration information.

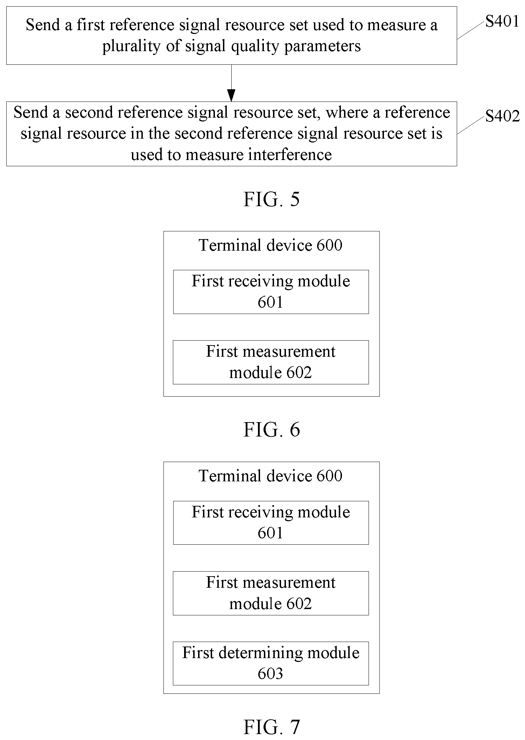

The method for measuring signal quality parameters that is applied to the terminal device is described above. A method for measuring signal quality parameters that is applied to a network device and that is provided in an embodiment of the present disclosure is described below with reference to FIG. 4 and FIG. 5.

As shown in FIG. 4, another method for measuring signal quality parameters that is provided in an embodiment of the present disclosure is applied to a network device. The method may include the following step.

Step 401: Send a first reference signal resource set used to measure a plurality of signal quality parameters.

At least one first reference signal resource is used to measure a signal parameter in a target signal quality parameter. At least one second reference signal resource is used to measure a first interference parameter in the target signal quality parameter. The target signal quality parameter is any one of the plurality of signal quality parameters. The first reference signal resource is a reference signal resource corresponding to the target signal quality parameter in the first reference signal resource set. The second reference signal resource is a reference signal resource in the first reference signal resource set other than the first reference signal resource.

The first reference signal resource set includes at least two reference signal resources. The reference signal resources included in the first reference signal resource set may include, but is not limited to, an SSB or a CSI-RS.

Optionally, the reference signal resources included in the first reference signal resource set may be CSI-RSs. This is because compared to signal parameter measurement based on an SSB, a manner of measuring a signal parameter based on a CSI-RS usually allows fine measurement of a to-be-measured beam, and enables a signal parameter obtained through measurement to be more accurate. This is beneficial to multi-beam and multi-user scheduling on a network side.

A reference signal resource of a signal parameter that is used to measure a signal-to-interference-plus-noise ratio may be some or all of first reference signal resources corresponding to the signal-to-interference-plus-noise ratio, and a reference signal resource of a first interference parameter that is used to measure a signal-to-interference-plus-noise ratio may be some or all of second reference signal resources corresponding to the signal-to-interference-plus-noise ratio. In addition, a reference signal resource of a signal parameter that is used to measure a signal-to-interference-plus-noise ratio may be used to measure a first interference parameter in another signal-to-interference-plus-noise ratio, and a reference signal resource of a first interference parameter that is used to measure a signal-to-interference-plus-noise ratio may be used to measure a signal parameter in another signal-to-interference-plus-noise ratio.

In this embodiment of this specification, different signal quality parameters in the plurality of signal quality parameters correspond to different first reference signal resources, and a first reference signal resource corresponding to one signal quality parameter is a second reference signal resource corresponding to another signal quality parameter.

The following are examples of specific manners of determining a signal parameter and a first interference parameter of a target signal quality parameter.

In an example, the measuring a signal parameter in a target signal quality parameter based on at least one first reference signal resource may be: processing an L1-RSRP or L1-RSRPs of the at least one first reference signal resource according to a first preset rule, to obtain the signal parameter of the target signal quality parameter.

When the signal parameter of the target signal quality parameter is to be determined based on a first reference signal resource, specifically, an L1-RSRP of the first reference signal resource may be determined as the signal parameter of the target signal quality parameter.

When the signal parameter of the target signal quality parameter is to be determined based on a plurality of first reference signal resources, an average value of L1-RSRPs of the plurality of first reference signal resources, a largest value in L1-RSRPs of the plurality of first reference signal resources, or a weighted sum of L1-RSRPs of the plurality of first reference signal resources may be determined as the signal parameter of the target signal quality parameter.

Certainly, the first preset rule for determining the signal parameter in the target signal quality parameter may further include another manner, and is not limited to the three manners listed in the foregoing examples.

In an example, the measuring a first interference parameter in the target signal quality parameter based on at least one second reference signal resource may be: processing an L1-RSRP or L1-RSRPs of the at least one second reference signal resource according to a second preset rule, to obtain the first interference parameter of the target signal quality parameter.

Specifically, when the first interference parameter of the target signal quality parameter is to be determined based on a second reference signal resource, specifically, an L1-RSRP of the second reference signal resource may be determined as the first interference parameter of the target signal quality parameter.

Specifically, when the first interference parameter of the target signal quality parameter is to be determined based on a plurality of second reference signal resources, in one manner, signal quality parameters corresponding to the plurality of second reference signal resources are first determined, then weighted summation is performed on L1-RSRPs of second reference signal resources corresponding to each signal quality parameter, and finally weighted sums of the L1-RSRPs corresponding to all signal quality parameters are added, to obtain the first interference parameter of the target signal quality parameter. In another manner, signal quality parameters corresponding to the plurality of second reference signal resources are first determined, then L1-RSRPs of second reference signal resources corresponding to each signal quality parameter are averaged, and finally average values of the L1-RSRPs corresponding to all signal quality parameters are added, to obtain the first interference parameter of the target signal quality parameter. In still another manner, signal quality parameters corresponding to the plurality of second reference signal resources are first determined, then a largest L1-RSRP is determined in L1-RSRPs of second reference signal resources corresponding to each signal quality parameter, and finally largest L1-RSRP values corresponding to all signal quality parameters are added, to obtain the first interference parameter of the target signal quality parameter.

In the method for measuring signal quality parameters that is provided in this embodiment of the present disclosure, the sent at least one first reference signal resource in the first reference signal resource set may be used to measure the signal parameter of the target signal quality parameter, and at least one second reference signal resource may be used to measure the interference parameter of the target signal quality parameter. Therefore, a measurement result that can better reflect channel quality of beams corresponding to a plurality of signal quality parameters can be obtained, so that the network device can accordingly determine an ideal beam for sending a signal or a channel to the terminal device, thereby improving a throughput and reducing a block error rate.

Optionally, a measurement result of the target signal quality parameter is determined based on the signal parameter and the first interference parameter. Specifically, the measurement result of the target signal quality parameter is a ratio of the signal parameter to the first interference parameter, the signal parameter is determined based on a received power or received powers of the at least one first reference signal resource, and the first interference parameter is determined based on a received power or received powers of the at least one second reference signal resource.

In this embodiment of the present disclosure, the measurement result of the target signal quality parameter is the ratio of the signal parameter to the first interference parameter. Therefore, the terminal device can obtain a measurement result that can better reflect channel quality of beams corresponding to a plurality of signal quality parameters, so that the network device can accordingly determine an ideal beam for sending a signal or a channel to the terminal device, thereby improving a throughput and reducing a block error rate.

Optionally, as shown in FIG. 5, a method for measuring signal quality parameters according to another embodiment of the present disclosure is applied to a network device. The method may further include:
Step 402: Send a second reference signal resource set, where a reference signal resource in the second reference signal resource set is used to measure interference.

The reference signal resource in the second reference signal resource set may be a reference signal resource specially used to measure interference. The reference signal resources may not be used to measure a signal parameter.

During actual application, a quantity of reference signal resources included in the second reference signal resource set may be less than or equal to a quantity of reference signal resources included in the first reference signal resource set, and the reference signal resources included in the second reference signal resource set have a correspondence with the reference signal resources included in the first reference signal resource set. Generally, one or more reference signal resources in the first reference signal resource set correspond to one reference signal resource in the second reference signal resource set.

A reference signal resource corresponding to the at least one first reference signal resource in the second reference signal resource set is used to measure a second interference parameter in the target signal quality parameter; and the measurement result of the target signal quality parameter is determined based on the signal parameter, the first interference parameter, and the second interference parameter. In an example, the first interference parameter and the second interference parameter are used to determine total interference in the target signal quality parameter; and the measurement result of the target signal quality parameter is determined based on a ratio of the signal parameter to the total interference.

Compared with the embodiment shown in FIG. 4, in the method for measuring signal quality parameters that is provided in this embodiment of the present disclosure, the second interference parameter used to measure the target signal quality parameter is further sent, so that the measurement result obtained by the terminal device through measurement can better reflect channel quality of a beam corresponding to the signal quality parameter, and the network device can accordingly determine an ideal beam for sending a signal or a channel to the terminal device, thereby improving a throughput and reducing a block error rate.

Optionally, the method for measuring signal quality parameters according to another embodiment of the present disclosure is applied to a network device. The method may further include: receiving at least one of the following information: a measurement result or measurement results of at least one signal quality parameter, an index or indexes of the at least one signal quality parameter corresponding to the at least one first reference signal resource, and a signal parameter or signal parameters of the at least one signal quality parameter corresponding to the at least one first reference signal resource.

The at least one signal quality parameter is a signal quality parameter whose measurement result or measurement results satisfies or satisfy a preset condition in the plurality of target signal quality parameters.

For example, M signal quality parameters are selected, in any one of the foregoing manners, from the N signal quality parameters that need to be measured. Then, measurement results of the M SINRs, an index or indexes of the at least one first reference signal resource corresponding to the M SINRs in step 102, an L1-RSRP or L1-RSRPs of the at least one first reference signal resource corresponding to the M SINRs, and other information related to the M SINRs are reported to the network device, for the network device to determine an ideal beam for sending a signal or a channel to the terminal device.

The method for measuring signal quality parameters according to another embodiment of the present disclosure is applied to a network device. The method further includes: configuring a value of a repetition parameter (repetition), where the value is included in configuration information used to configure the first reference signal resource set.

When the value is off, the at least one first reference signal resource is used to measure the signal parameter in the target signal quality parameter, and the at least one second reference signal resource is used to measure the first interference parameter in the target signal quality parameter.

This embodiment of the present disclosure is intended to describe the following content: When the value of repetition is off, the method for measuring signal quality parameters that is provided in this embodiment of the present disclosure is used to measure measurement results of a plurality of signal quality parameters. On the contrary, when the value of repetition is on (on), the method for measuring signal quality parameters that is provided in this embodiment of the present disclosure may not be used for measurement.

The method for measuring signal quality parameters that is applied to a network device is described above. The description of this method is relatively brief, because this method corresponds to the foregoing method for measuring signal quality parameters that is applied to a terminal device. For related details, refer to the description of the foregoing method for measuring signal quality parameters that is applied to a terminal device.

The following describes in detail a terminal device and a network device according to the embodiments of the present disclosure with reference to FIG. 6 to FIG. 10.

FIG. 6 is a schematic structural diagram of a terminal device according to an embodiment of the present disclosure. As shown in FIG. 6, the terminal device 600 includes a first receiving module 601 and a first measurement module 602.

The first receiving module 601 is configured to receive a first reference signal resource set used to measure a plurality of signal quality parameters.

The first reference signal resource set includes at least two reference signal resources.

The reference signal resources included in the first reference signal resource set may include, but is not limited to, an SSB or a CSI-RS.

Optionally, the reference signal resources included in the first reference signal resource set may be CSI-RSs. This is because compared to signal parameter measurement based on an SSB, a manner of measuring a signal parameter based on a CSI-RS usually allows fine measurement of a to-be-measured beam, and enables a signal parameter obtained through measurement to be more accurate. This is beneficial to multi-beam and multi-user scheduling on a network side.

The first measurement module 602 is configured to: measure a signal parameter in a target signal quality parameter based on at least one first reference signal resource, and measure a first interference parameter in the target signal quality parameter based on at least one second reference signal resource.

The target signal quality parameter is any one of the plurality of signal quality parameters, the first reference signal resource is a reference signal resource corresponding to the target signal quality parameter in the first reference signal resource set, and the second reference signal resource is a reference signal resource in the first reference signal resource set other than the first reference signal resource.

A reference signal resource of a signal parameter that is used to measure a signal-to-interference-plus-noise ratio may be some or all of first reference signal resources corresponding to the signal-to-interference-plus-noise ratio. A reference signal resource of a first interference parameter that is used to measure a signal-to-interference-plus-noise ratio may be some or all of second reference signal resources corresponding to the signal-to-interference-plus-noise ratio.

In addition, a reference signal resource of a signal parameter that is used to measure a signal-to-interference-plus-noise ratio may be used to measure a first interference parameter in another signal-to-interference-plus-noise ratio, and a reference signal resource of a first interference parameter that is used to measure a signal-to-interference-plus-noise ratio may be used to measure a signal parameter in another signal-to-interference-plus-noise ratio.

It can be learned that in this embodiment of this specification, different signal quality parameters in the plurality of signal quality parameters correspond to different first reference signal resources, and a first reference signal resource corresponding to one signal quality parameter may be used as a second reference signal resource corresponding to another signal quality parameter.

The following are examples of specific manners of determining a signal parameter and a first interference parameter of a target signal quality parameter by the first measurement module 602.

In an example, the measuring a signal parameter in a target signal quality parameter based on at least one first reference signal resource may include: processing an L1-RSRP or L1-RSRPs of the at least one first reference signal resource according to a first preset rule, to obtain the signal parameter of the target signal quality parameter.

When the signal parameter of the target signal quality parameter is to be determined based on a first reference signal resource, specifically, an L1-RSRP of the first reference signal resource may be determined as the signal parameter of the target signal quality parameter.

When the signal parameter of the target signal quality parameter is to be determined based on a plurality of first reference signal resources, an average value of L1-RSRPs of the plurality of first reference signal resources, a largest value in L1-RSRPs of the plurality of first reference signal resources, or a weighted sum of L1-RSRPs of the plurality of first reference signal resources may be determined as the signal parameter of the target signal quality parameter.

Certainly, the first preset rule for determining the signal parameter in the target signal quality parameter may further include another manner, and is not limited to the three manners listed in the foregoing examples.

In an example, the measuring a first interference parameter in the target signal quality parameter based on at least one second reference signal resource may include: processing an L1-RSRP or L1-RSRPs of the at least one second reference signal resource according to a second preset rule, to obtain the first interference parameter of the target signal quality parameter.

When the first interference parameter of the target signal quality parameter is to be determined based on a second reference signal resource, specifically, an L1-RSRP of the second reference signal resource may be determined as the first interference parameter of the target signal quality parameter.

When the first interference parameter of the target signal quality parameter is to be determined based on a plurality of second reference signal resources, in one manner, signal quality parameters corresponding to the plurality of second reference signal resources are first determined, then weighted summation is performed on L1-RSRPs of second reference signal resources corresponding to each signal quality parameter, and finally weighted sums of the L1-RSRPs corresponding to all signal quality parameters are added, to obtain the first interference parameter of the target signal quality parameter. In another manner, signal quality parameters corresponding to the plurality of second reference signal resources are first determined, then L1-RSRPs of second reference signal resources corresponding to each signal quality parameter are averaged, and finally average values of the L1-RSRPs corresponding to all signal quality parameters are added, to obtain the first interference parameter of the target signal quality parameter. In still another manner, signal quality parameters corresponding to the plurality of second reference signal resources are first determined, then a largest L1-RSRP is determined in L1-RSRPs of second reference signal resources corresponding to each signal quality parameter, and finally largest L1-RSRP values corresponding to all signal quality parameters are added, to obtain the first interference parameter of the target signal quality parameter.

Similarly, the second preset rule for determining the first interference parameter in the target signal quality parameter may further include another manner, and is not limited to the manners listed in the foregoing examples.

The terminal device 600 provided in this embodiment of the present disclosure can determine the signal parameter of the target signal quality parameter based on the at least one first reference signal resource in the first reference signal resource set for measuring a plurality of signal quality parameters, and can determine the first interference parameter of the target signal quality parameter based on the at least one second reference signal resource in the first reference signal resource set. Therefore, a measurement result that can better reflect channel quality of beams corresponding to a plurality of signal quality parameters can be obtained, so that the network device can accordingly determine an ideal beam for sending a signal or a channel to the terminal device, thereby improving a throughput and reducing a block error rate.

Optionally, as shown in FIG. 7, the terminal device 600 according to another embodiment of the present disclosure may further include a first determining module 603.

The first determining module 603 is configured to determine a measurement result of the target signal quality parameter based on the signal parameter and the first interference parameter.

In an example, a ratio of the signal parameter to the first interference parameter may be determined as the measurement result of the target signal quality parameter. The signal parameter is determined based on a received power or received powers of the at least one first reference signal resource, and the first interference parameter is determined based on a received power or received powers of the at least one second reference signal resource.

In this embodiment of the present disclosure, the measurement result of the target signal quality parameter is determined based on the signal parameter and the first interference parameter of the target signal quality parameter. Therefore, a measurement result that can better reflect channel quality of beams corresponding to a plurality of signal quality parameters can be obtained, so that the network device can accordingly determine an ideal beam for sending a signal or a channel to the terminal device, thereby improving a throughput and reducing a block error rate.

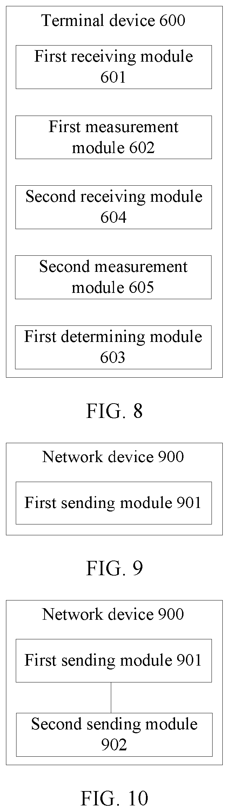

Optionally, as shown in FIG. 8, the terminal device 600 according to another embodiment of the present disclosure may further include a second receiving module 604 and a second measurement module 605.

The second receiving module 604 is configured to receive a second reference signal resource set before the first determining module 603 is triggered, where a reference signal resource in the second reference signal resource set is used to measure interference.

The reference signal resource in the second reference signal resource set may be a reference signal resource specially used to measure interference. The reference signal resources may not be used to measure a signal parameter.

During actual application, a quantity of reference signal resources included in the second reference signal resource set may be less than or equal to a quantity of reference signal resources included in the first reference signal resource set, and the reference signal resources included in the second reference signal resource set have a correspondence with the reference signal resources included in the first reference signal resource set. Generally, one or more reference signal resources in the first reference signal resource set correspond to one reference signal resource in the second reference signal resource set.

The second measurement module 605 is configured to measure a second interference parameter in the target signal quality parameter based on a reference signal resource corresponding to the at least one first reference signal resource in the second reference signal resource set.

For a process of measuring a second interference parameter in the target signal quality parameter based on a reference signal resource corresponding to the at least one first reference signal resource in the second reference signal resource set, refer to the related art. Details are not described herein again.

Based on this embodiment, the first determining module 603 may be configured to determine the measurement result of the target signal quality parameter based on the signal parameter, the first interference parameter, and the second interference parameter.

In an example, specifically, total interference in the target signal quality parameter may be first determined based on the first interference parameter and the second interference parameter; and then a ratio of the signal parameter to the total interference may be determined as the measurement result of the target signal quality parameter.

Compared with the embodiment shown in FIG. 7, the terminal device 600 provided in this embodiment of the present disclosure further introduces the second interference parameter obtained through measurement based on the reference signal resource used to measure interference into the measurement result of the signal quality parameter, so that the measurement result of the signal quality parameter can better reflect channel quality of a beam corresponding to the signal quality parameter, and the network device can accordingly determine an ideal beam for sending a signal or a channel to the terminal device, thereby improving a throughput and reducing a block error rate.

Optionally, based on any one of the foregoing embodiments, the terminal device 600 provided in this embodiment of the present disclosure may further include a selection module and a reporting module.

The selection module is configured to select at least one signal quality parameter whose measurement result or measurement results satisfies or satisfy a preset condition from the plurality of target signal quality parameters.

The reporting module is configured to report at least one of the following information: the measurement result or the measurement results of the at least one signal quality parameter, an index or indexes of the at least one first reference signal resource corresponding to the at least one signal quality parameter, and a signal parameter or signal parameters of the at least one first reference signal resource corresponding to the at least one signal quality parameter.

In an example, at least one signal quality parameter whose measurement result or measurement results is or are greater than or equal to a preset threshold may be selected from the plurality of signal quality parameters (SINR). Alternatively, the plurality of signal quality parameters are sorted in descending order of measurement results, and at least one signal quality parameter ranking top is selected.

For example, M signal quality parameters are selected, in any one of the foregoing manners, from the N signal quality parameters that need to be measured. Then, measurement results of the M SINRs, an index or indexes of the at least one first reference signal resource corresponding to the M SINRs in step 102, an L1-RSRP or L1-RSRPs of the at least one first reference signal resource corresponding to the M SINRs, and other information related to the M SINRs are reported to the network device, for the network device to determine an ideal beam for sending a signal or a channel to the terminal device.

Based on any one of the foregoing embodiments, the terminal device 600 provided in this embodiment of the present disclosure further includes a second determining module, configured to determine a value of a repetition parameter (repetition), where the value is included in configuration information used to configure the first reference signal resource set.

When the value is off (off), the first measurement module 602 is triggered.

This embodiment of the present disclosure is intended to describe the following content: When the value of repetition is off, the terminal device 600 provided in this embodiment of the present disclosure is used to measure measurement results of a plurality of signal quality parameters. On the contrary, when the value of repetition is on (on), the terminal device 600 provided in this embodiment of the present disclosure may not be used for measurement.

It should be noted that because the first reference signal resource set, the second reference signal resource set, and the value of repetition can be configured by using same configuration information, the first receiving module 601 and the second receiving module 604 in the foregoing descriptions may be a same module.

The terminal devices shown in FIG. 6 to FIG. 8 may be used to implement the embodiments of the method for measuring signal quality parameters shown in FIG. 1 to FIG. 3. For related details, refer to the foregoing method embodiments.

As shown in FIG. 9, an embodiment of the present disclosure further provides a network device 900. The network device 900 may include a first sending module 901.

The first sending module 901 is configured to send a first reference signal resource set used to measure a plurality of signal quality parameters.

At least one first reference signal resource is used to measure a signal parameter in a target signal quality parameter. At least one second reference signal resource is used to measure a first interference parameter in the target signal quality parameter. The target signal quality parameter is any one of the plurality of signal quality parameters. The first reference signal resource is a reference signal resource corresponding to the target signal quality parameter in the first reference signal resource set. The second reference signal resource is a reference signal resource in the first reference signal resource set other than the first reference signal resource.

The first reference signal resource set includes at least two reference signal resources. The reference signal resources included in the first reference signal resource set may include, but is not limited to, an SSB or a CSI-RS.

Optionally, the reference signal resources included in the first reference signal resource set may be CSI-RSs. This is because compared to signal parameter measurement based on an SSB, a manner of measuring a signal parameter based on a CSI-RS usually allows fine measurement of a to-be-measured beam, and enables a signal parameter obtained through measurement to be more accurate. This is beneficial to multi-beam and multi-user scheduling on a network side.

A reference signal resource of a signal parameter that is used to measure a signal-to-interference-plus-noise ratio may be some or all of first reference signal resources corresponding to the signal-to-interference-plus-noise ratio, and a reference signal resource of a first interference parameter that is used to measure a signal-to-interference-plus-noise ratio may be some or all of second reference signal resources corresponding to the signal-to-interference-plus-noise ratio. In addition, a reference signal resource of a signal parameter that is used to measure a signal-to-interference-plus-noise ratio may be used to measure a first interference parameter in another signal-to-interference-plus-noise ratio, and a reference signal resource of a first interference parameter that is used to measure a signal-to-interference-plus-noise ratio may be used to measure a signal parameter in another signal-to-interference-plus-noise ratio.

In this embodiment of this specification, different signal quality parameters in the plurality of signal quality parameters correspond to different first reference signal resources, and a first reference signal resource corresponding to one signal quality parameter is a second reference signal resource corresponding to another signal quality parameter.

The following are examples of specific manners of determining a signal parameter and a first interference parameter of a target signal quality parameter.

In an example, the measuring a signal parameter in a target signal quality parameter based on at least one first reference signal resource may be: processing an L1-RSRP or L1-RSRPs of the at least one first reference signal resource according to a first preset rule, to obtain the signal parameter of the target signal quality parameter.

When the signal parameter of the target signal quality parameter is to be determined based on a first reference signal resource, specifically, an L1-RSRP of the first reference signal resource may be determined as the signal parameter of the target signal quality parameter.

When the signal parameter of the target signal quality parameter is to be determined based on a plurality of first reference signal resources, an average value of L1-RSRPs of the plurality of first reference signal resources, a largest value in L1-RSRPs of the plurality of first reference signal resources, or a weighted sum of L1-RSRPs of the plurality of first reference signal resources may be determined as the signal parameter of the target signal quality parameter.

Certainly, the first preset rule for determining the signal parameter in the target signal quality parameter may further include another manner, and is not limited to the three manners listed in the foregoing examples.

In an example, the measuring a first interference parameter in the target signal quality parameter based on at least one second reference signal resource may be: processing an L1-RSRP or L1-RSRPs of the at least one second reference signal resource according to a second preset rule, to obtain the first interference parameter of the target signal quality parameter.

Specifically, when the first interference parameter of the target signal quality parameter is to be determined based on a second reference signal resource, specifically, an L1-RSRP of the second reference signal resource may be determined as the first interference parameter of the target signal quality parameter.

Specifically, when the first interference parameter of the target signal quality parameter is to be determined based on a plurality of second reference signal resources, in one manner, signal quality parameters corresponding to the plurality of second reference signal resources are first determined, then weighted summation is performed on L1-RSRPs of second reference signal resources corresponding to each signal quality parameter, and finally weighted sums of the L1-RSRPs corresponding to all signal quality parameters are added, to obtain the first interference parameter of the target signal quality parameter. In another manner, signal quality parameters corresponding to the plurality of second reference signal resources are first determined, then L1-RSRPs of second reference signal resources corresponding to each signal quality parameter are averaged, and finally average values of the L1-RSRPs corresponding to all signal quality parameters are added, to obtain the first interference parameter of the target signal quality parameter. In still another manner, signal quality parameters corresponding to the plurality of second reference signal resources are first determined, then a largest L1-RSRP is determined in L1-RSRPs of second reference signal resources corresponding to each signal quality parameter, and finally largest L1-RSRP values corresponding to all signal quality parameters are added, to obtain the first interference parameter of the target signal quality parameter.

Optionally, a measurement result of the target signal quality parameter is determined based on the signal parameter and the first interference parameter. Specifically, the measurement result of the target signal quality parameter is a ratio of the signal parameter to the first interference parameter, the signal parameter is determined based on a received power or received powers of the at least one first reference signal resource, and the first interference parameter is determined based on a received power or received powers of the at least one second reference signal resource.

According to the network device 900 provided in this embodiment of the present disclosure, the sent at least one first reference signal resource in the first reference signal resource set may be used to measure the signal parameter of the target signal quality parameter, and at least one second reference signal resource may be used to measure the interference parameter of the target signal quality parameter. Therefore, a measurement result that can better reflect channel quality of beams corresponding to a plurality of signal quality parameters can be obtained, so that the network device can accordingly determine an ideal beam for sending a signal or a channel to the terminal device, thereby improving a throughput and reducing a block error rate.

Optionally, as shown in FIG. 10, the network device 900 according to another embodiment of the present disclosure may further include a second sending module 902.

The second sending module 902 is configured to send a second reference signal resource set, where a reference signal resource in the second reference signal resource set is used to measure interference.

The reference signal resource in the second reference signal resource set may be a reference signal resource specially used to measure interference. The reference signal resources may not be used to measure a signal parameter.

During actual application, a quantity of reference signal resources included in the second reference signal resource set may be less than or equal to a quantity of reference signal resources included in the first reference signal resource set, and the reference signal resources included in the second reference signal resource set have a correspondence with the reference signal resources included in the first reference signal resource set. Generally, one or more reference signal resources in the first reference signal resource set correspond to one reference signal resource in the second reference signal resource set.

A reference signal resource corresponding to the at least one first reference signal resource in the second reference signal resource set is used to measure a second interference parameter in the target signal quality parameter; and the measurement result of the target signal quality parameter is determined based on the signal parameter, the first interference parameter, and the second interference parameter. In an example, the first interference parameter and the second interference parameter are used to determine total interference in the target signal quality parameter; and the measurement result of the target signal quality parameter is determined based on a ratio of the signal parameter to the total interference.

Compared with the embodiment shown in FIG. 9, the network device 900 provided in this embodiment of the present disclosure further sends the second interference parameter used to measure the target signal quality parameter, so that the measurement result obtained by the terminal device through measurement can better reflect channel quality of a beam corresponding to the signal quality parameter, and the network device can accordingly determine an ideal beam for sending a signal or a channel to the terminal device, thereby improving a throughput and reducing a block error rate.

Optionally, the network device 900 according to another embodiment of the present disclosure may further include a receiving module, configured to receive at least one of the following information: a measurement result or measurement results of at least one signal quality parameter, an index or indexes of the at least one signal quality parameter corresponding to the at least one first reference signal resource, and a signal parameter or signal parameters of the at least one signal quality parameter corresponding to the at least one first reference signal resource.

The at least one signal quality parameter is a signal quality parameter whose measurement result or measurement results satisfies or satisfy a preset condition in the plurality of target signal quality parameters.

For example, M signal quality parameters are selected, in any one of the foregoing manners, from the N signal quality parameters that need to be measured. Then, measurement results of the M SINRs, an index or indexes of the at least one first reference signal resource corresponding to the M SINRs in step 102, an L1-RSRP or L1-RSRPs of the at least one first reference signal resource corresponding to the M SINRs, and other information related to the M SINRs are reported to the network device, for the network device to determine an ideal beam for sending a signal or a channel to the terminal device.

The network device 900 according to another embodiment of the present disclosure further includes a configuration module, configured to configure a value of a repetition, where the value is included in configuration information used to configure the first reference signal resource set.

When the value is off, the at least one first reference signal resource is used to measure the signal parameter in the target signal quality parameter, and the at least one second reference signal resource is used to measure the first interference parameter in the target signal quality parameter.

This embodiment of the present disclosure is intended to illustrate that when the value of repetition is off, the network device 900 provided in this embodiment of the present disclosure is used to send the first reference signal resource set and the second reference signal resource set to the terminal device, for the terminal device to measure measurement results of a plurality of signal quality parameters.

It should be noted that because the first reference signal resource set, the second reference signal resource set, and the value of repetition can be configured by using same configuration information, the first sending module 901, the second sending module 602, and the configuration module in the foregoing descriptions may be a same module.

The network devices shown in FIG. 9 and FIG. 10 may be used to implement the embodiments of the method for measuring signal quality parameters shown in FIG. 4 and FIG. 5. For related details, refer to the foregoing method embodiments.

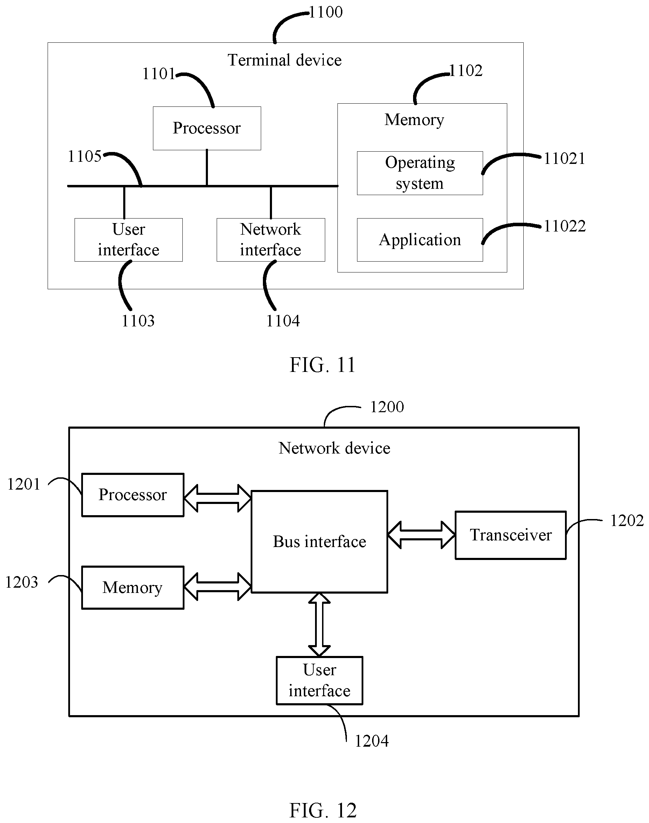

FIG. 11 is a schematic structural diagram of a terminal device according to another embodiment of the present disclosure. The terminal device 1100 shown in FIG. 11 includes at least one processor 1101, a memory 1102, at least one network interface 1104, and a user interface 1103. The components in the terminal device 1100 are coupled together through a bus system 1105. It may be understood that the bus system 1105 is configured to implement connection and communication between these components. In addition to a data bus, the bus system 1105 also includes a power bus, a control bus, and a status signal bus. However, for clarity of description, various buses are marked as the bus system 1105 in FIG. 11.

The user interface 1103 may include a display, a keyboard, or a clicking device, for example, a mouse, a trackball (trackball), a touch panel, or a touchscreen.

It may be understood that the memory 1102 in this embodiment of the present disclosure may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of exemplary but not restrictive description, many forms of RAMs are available, such as a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch Link DRAM, SLDRAM), and a direct rambus random access memory (Direct Rambus RAM, DRRAM). The memory 1102 in the system and the method that are described in the embodiments of the present disclosure is intended to include but is not limited to these and any other suitable types of memories.

In some implementations, the memory 1102 stores the following elements: executable modules or data structures, a subset thereof, or an extended set thereof: an operating system 11021 and an application 11022.

The operating system 11021 includes various system programs, for example, a framework layer, a kernel library layer, and a driver layer, and is configured to implement various basic services and process hardware-based tasks. The application 11022 includes various applications, for example, a media player (Media Player) and a browser (Browser), and is configured to implement various application services. A program for implementing the method in the embodiments of the present disclosure may be included in the application 11022.

In this embodiment of the present disclosure, the terminal device 1100 further includes a computer program stored in the memory 1102 and capable of running on the processor 1101. The computer program, when executed by the processor 1101, implements each process of the method for measuring signal quality parameters, and can achieve a same technical effect. To avoid repetition, details are not described herein again.

The method disclosed in the embodiments of the present disclosure may be applied to the processor 1101 or implemented by the processor 1101. The processor 1101 may be an integrated circuit chip having a signal processing capability. During implementation, the steps of the foregoing method may be completed by hardware integrated logic circuits in the processor 1101 or instructions in a form of software. The foregoing processor 1101 may be a general-purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a discrete gate or transistor logic device, or a discrete hardware component. The processor 1101 may implement or perform the methods, steps, and logic block diagrams disclosed in the embodiments of the present disclosure. The general-purpose processor may be a microprocessor, any conventional processor, or the like. The steps of the method disclosed in the embodiments of the present disclosure may be directly performed by a hardware decoding processor or performed by a combination of hardware and software modules in a decoding processor. The software module may be located in a mature computer-readable storage medium in this field such as a random access memory, a flash memory, a read-only memory, a programmable read-only memory or an electrically erasable programmable memory, or a register. The computer-readable storage medium is located in the memory 1102, and the processor 1101 reads information from the memory 1102 and completes the steps of the foregoing method in combination with hardware of the processor 1101. Specifically, the computer-readable storage medium stores a computer program. The computer program, when executed by the processor 1101, implements the steps of the foregoing embodiment of the method for measuring signal quality parameters.

FIG. 12 is a structural diagram of a network device applied in an embodiment of the present disclosure. The network device can realize the details of the foregoing method for measuring signal quality parameters and achieve the same effect. As shown in FIG. 12, the network device 1200 includes a processor 1201, transceiver 1202, a memory 1203, a user interface 1204, and a bus interface.

In this embodiment of the present disclosure, the network device 1200 further includes a computer program stored in the memory 1102 and runnable on the processor 1201. The computer program, when executed by the processor 1201, implements each process of the foregoing method for measuring signal quality parameters, and can achieve a same technical effect. To avoid repetition, details are not described herein again.

In FIG. 12, a bus architecture may include any quantity of interconnected buses and bridges that are specifically linked together by various circuits of at least one processor represented by the processor 1201 and a memory represented by the memory 1203. The bus architecture may further link together various other circuits such as peripheral devices, voltage regulators, and power management circuits. These are all known in the art, and therefore, no further description is provided herein. The bus interface provides an interface. The transceiver 1202 may be a plurality of components, that is, include a transmitter and a receiver, and provide a unit for communicating with various other apparatuses on a transmission medium. For different terminal devices, the user interface 1204 may also be an interface capable of connecting externally and internally to a required device. The connected device includes but not limited to a keypad, a display, a speaker, a microphone, a joystick, or the like.

The processor 1201 is responsible for managing the bus architecture and general processing. The memory 1203 can store data used by the processor 1201 when performing operations.

It can be understood that these embodiments described in the embodiments of the present disclosure may be implemented with hardware, software, firmware, middleware, microcode, or a combination thereof. For hardware implementation, a processing unit can be implemented in at least one application-specific integrated circuit (Application Specific Integrated Circuits, ASIC), a digital signal processor (Digital Signal Processing, DSP), a digital signal processing device (DSP Device, DSPD), a programmable logic device (Programmable Logic Device, PLD), a field-programmable gate array (Field-Programmable Gate Array, FPGA), a general-purpose processor, a controller, a microcontroller, a microprocessor, other electronic units used to perform the functions described in this disclosure, or a combination thereof.

For software implementation, the technology described in the embodiments of the present disclosure may be implemented by using modules (for example, processes or functions) that perform the functions described in the embodiments of the present disclosure. Software code may be stored in the memory and executed by the processor. The memory may be implemented inside or outside the processor.

An embodiment of the present disclosure further provides a computer-readable storage medium. The computer-readable storage medium stores a computer program. The computer program, when executed by a processor, implements the foregoing method for measuring signal quality parameters or each process of the embodiments of the foregoing method for measuring signal quality parameters, and can achieve the same technical effect. To avoid repetition, details are not described herein again. The computer-readable storage medium is, for example, a read-only memory (Read-Only Memory, ROM for short), a random access memory (Random Access Memory, RAM for short), a magnetic disk, or an optical disc.

An embodiment of this disclosure further provides a computer program product including instructions. When a computer runs the instructions of the computer program product, the computer performs the foregoing method for measuring signal quality parameters. Specifically, the computer program product may run on the foregoing network device.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present disclosure.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this disclosure, it should be understood that the disclosed system, apparatus, and method may be implemented in other manners. For example, the described apparatus embodiment is merely an example. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separated, and the components displayed as units may or may not be physical units, and may be located in one place or may be distributed on a plurality of network units. Some or all of the units may be selected based on actual requirements to achieve the objectives of the solutions of the embodiments.

In addition, function units in the embodiments of the present disclosure may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present disclosure essentially, or the part contributing to the related art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of the present disclosure. The foregoing storage medium includes any medium that can store program code, such as a USB flash drive, a removable hard disk, a read-only memory (Read-only Memory, ROM), a random access memory (Random Access Memory, RAM), a magnetic disk, or an optical disc.

A person of ordinary skill in the art can understand that all or some of the procedures in the methods of the foregoing embodiments may be implemented by a computer program controlling related hardware. The program may be stored in a computer-readable storage medium. When the program is executed, the procedures of the embodiments of the foregoing methods may be performed. The storage medium may be a magnetic disk, an optical disc, a ROM, a RAM, or the like.

It can be understood that these embodiments described in the embodiments of the present disclosure may be implemented with hardware, software, firmware, middleware, microcode, or a combination thereof. For hardware implementation, a processing unit can be implemented in one or more application-specific integrated circuits (Application Specific Integrated Circuits, ASIC), a digital signal processor (Digital Signal Processor, DSP), a digital signal processing device (DSP Device, DSPD), a programmable logic device (Programmable Logic Device, PLD), a field-programmable gate array (Field-Programmable Gate Array, FPGA), a general-purpose processor, a controller, a microcontroller, a microprocessor, other electronic units used to perform the functions described in this disclosure, or a combination thereof.

For software implementation, the technology described in the embodiments of the present disclosure may be implemented by using modules (for example, processes or functions) that perform the functions described in the embodiments of the present disclosure. Software code may be stored in the memory and executed by the processor. The memory may be implemented inside or outside the processor.

The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

**Claims**

1. A method for measuring signal quality parameters, performed by a terminal device, and comprising:

   receiving (S101) a first reference signal resource set used to measure a plurality of signal quality parameters; and

measuring (S102) a signal parameter in a target signal quality parameter based on at least one first reference signal resource, and measuring (S102) a first interference parameter in the target signal quality parameter based on at least one second reference signal resource, wherein

the target signal quality parameter is any one of the plurality of signal quality parameters, the first reference signal resource is a reference signal resource corresponding to the target signal quality parameter in the first reference signal resource set, and the second reference signal resource is a reference signal resource in the first reference signal resource set other than the first reference signal resource;

wherein the method further comprises:

determining a value of a repetition, wherein the value is comprised in configuration information used to configure the first reference signal resource set; wherein

when the value is off, the signal parameter in the target signal quality parameter is measured based on the at least one first reference signal resource, and the first interference parameter in the target signal quality parameter is measured based on the at least one second reference signal resource.

2. The method according to claim 1, wherein different signal quality parameters in the plurality of signal quality parameters correspond to different first reference signal resources, and a first reference signal resource corresponding to one signal quality parameter is a second reference signal resource corresponding to another signal quality parameter.

3. The method according to claim 1, further comprising:
determining (S103) a measurement result of the target signal quality parameter based on the signal parameter and the first interference parameter.

4. The method according to claim 3, wherein the determining (S103) the measurement result of the target signal quality parameter based on the signal parameter and the first interference parameter comprises:
determining a ratio of the signal parameter to the first interference parameter as the measurement result of the target signal quality parameter, wherein the signal parameter is determined based on a received power or received powers of the at least one first reference signal resource, and the first interference parameter is determined based on a received power or received powers of the at least one second reference signal resource.

5. The method according to claim 3, further comprising:

receiving (S104) a second reference signal resource set, wherein a reference signal resource in the second reference signal resource set is used to measure interference; and
measuring (S105) a second interference parameter in the target signal quality parameter based on a reference signal resource corresponding to the at least one first reference signal resource in the second reference signal resource set, wherein
the determining (S103) a measurement result of the target signal quality parameter based on the signal parameter and the first interference parameter comprises: determining the measurement result of the target signal quality parameter based on the signal parameter, the first interference parameter, and the second interference parameter.

6. The method according to any one of claims 1 to 5, further comprising:

selecting at least one signal quality parameter whose measurement result or measurement results satisfies or satisfy a preset condition from the plurality of target signal quality parameters; and
reporting at least one of: the measurement result or the measurement results of the at least one signal quality parameter, an index or indexes of the at least one first reference signal resource corresponding to the at least one signal quality parameter, and a signal parameter or signal parameters of the at least one first reference signal resource corresponding to the at least one signal quality parameter.

7. The method according to any one of claims 1 to 5, wherein
the reference signal resource comprises a synchronization signal block, SSB, or a channel state information reference signal, CSI-RS.

8. A method for measuring signal quality parameters, performed by a network device, and comprising:

sending (S401) a first reference signal resource set used to measure a plurality of signal quality parameters, wherein

at least one first reference signal resource is used to measure a signal parameter in a target signal quality parameter, at least one second reference signal resource is used to measure a first interference parameter in the target signal quality parameter, the target signal quality parameter is any one of the plurality of signal quality parameters, the first reference signal resource is a reference signal resource corresponding to the target signal quality parameter in the first reference signal resource set, and the second reference signal resource is a reference signal resource in the first reference signal resource set other than the first reference signal resource; wherein the method further comprises:

configuring a value of a repetition, wherein the value is comprised in configuration information used to configure the first reference signal resource set; wherein

when the value is off, the at least one first reference signal resource is used to measure the signal parameter in the target signal quality parameter, and the at least one second reference signal resource is used to measure the first interference parameter in the target signal quality parameter.

9. The method according to claim 8, wherein
different signal quality parameters in the plurality of signal quality parameters correspond to different first reference signal resources, and a first reference signal resource corresponding to one signal quality parameter is a second reference signal resource corresponding to another signal quality parameter.

10. The method according to claim 8 or 9, further comprising:

receiving at least one of: a measurement result or measurement results of at least one signal quality parameter, an index or indexes of the at least one signal quality parameter corresponding to the at least one first reference signal resource, and a signal parameter or signal parameters of the at least one signal quality parameter corresponding to the at least one first reference signal resource, wherein
the at least one signal quality parameter is a signal quality parameter whose measurement result or measurement results satisfies or satisfy a preset condition in the plurality of target signal quality parameters.

11. A terminal device (600), comprising:

a first receiving module (601), configured to receive a first reference signal resource set used to measure a plurality of signal quality parameters; and
a first measurement module (602), configured to: measure a signal parameter in a target signal quality parameter based on at least one first reference signal resource, and measure a first interference parameter in the target signal quality parameter based on at least one second reference signal resource, wherein
the target signal quality parameter is any one of the plurality of signal quality parameters, the first reference signal resource is a reference signal resource corresponding to the target signal quality parameter in the first reference signal resource set, and the second reference signal resource is a reference signal resource in the first reference signal resource set other than the first reference signal resource;
wherein the terminal device (600) further comprises:

a second determining module, configured to determine a value of a repetition, wherein the value is comprised in configuration information used to configure the first reference signal resource set; wherein
when the value is off, the signal parameter in the target signal quality parameter is measured based on the at least one first reference signal resource, and the first interference parameter in the target signal quality parameter is measured based on the at least one second reference signal resource.

12. The terminal device (600) according to claim 11, wherein different signal quality parameters in the plurality of signal quality parameters correspond to different first reference signal resources, and a first reference signal resource corresponding to one signal quality parameter is a second reference signal resource corresponding to another signal quality parameter.

13. The terminal device (600) according to claim 11, further comprising:
a first determining module (603), configured to determine a measurement result of the target signal quality parameter based on the signal parameter and the first interference parameter.

**14.** A network device (900), comprising:

a first sending module (901), configured to send a first reference signal resource set used to measure a plurality of signal quality parameters, wherein

at least one first reference signal resource is used to measure a signal parameter in a target signal quality parameter, at least one second reference signal resource is used to measure a first interference parameter in the target signal quality parameter, the target signal quality parameter is any one of the plurality of signal quality parameters, the first reference signal resource is a reference signal resource corresponding to the target signal quality parameter in the first reference signal resource set, and the second reference signal resource is a reference signal resource in the first reference signal resource set other than the first reference signal resource; wherein the network device (900) further comprises:

a configuration module, configured to configure a value of a repetition, wherein the value is comprised in configuration information used to configure the first reference signal resource set; wherein

when the value is off, the at least one first reference signal resource is used to measure the signal parameter in the target signal quality parameter, and the at least one second reference signal resource is used to measure the first interference parameter in the target signal quality parameter.

**15.** The network device (900) according to claim 14, wherein different signal quality parameters in the plurality of signal quality parameters correspond to different first reference signal resources, and a first reference signal resource corresponding to one signal quality parameter is a second reference signal resource corresponding to another signal quality parameter.

**Patentansprüche**

**1.** Ein Verfahren zum Messen von Signalqualitätsparametern, das von einer Endgerätvorrichtung durchgeführt wird und Folgendes beinhaltet:

Empfangen (S101) eines ersten Referenzsignalressourcensatzes, der dazu genutzt wird, eine Vielzahl von Signalqualitätsparametern zu messen; und
Messen (S102) eines Signalparameters in einem Zielsignalqualitätsparameter auf der Basis mindestens einer ersten Referenzsignalressource und Messen (S102) eines ersten Interferenzparameters in dem Zielsignalqualitätsparameter auf der Basis mindestens einer zweiten Referenzsignalressource, wobei
der Zielsignalqualitätsparameter ein beliebiger der Vielzahl von Signalqualitätsparametern ist, die erste Referenzsignalressource eine Referenzsignalressource ist, die mit dem Zielsignalqualitätsparameter in dem ersten Referenzsignalressourcensatz korrespondiert, und die zweite Referenzsignalressource eine Referenzsignalressource in dem ersten Referenzsignalressourcensatz ist, die nicht die erste Referenzsignalressource ist; wobei das Verfahren ferner Folgendes beinhaltet:

Bestimmen eines Werts einer Wiederholung, wobei der Wert in Konfigurationsinformationen beinhaltet ist, die dazu genutzt werden, den ersten Referenzsignalressourcensatz zu konfigurieren; wobei,
wenn der Wert aus ist, der Signalparameter in dem Zielsignalqualitätsparameter auf der Basis der mindestens einen ersten Referenzsignalressource gemessen wird und der erste Interferenzparameter in dem Zielsignalqualitätsparameter auf der Basis der mindestens einen zweiten Referenzsignalressource gemessen wird.

**2.** Verfahren gemäß Anspruch 1, wobei unterschiedliche Signalqualitätsparameter in der Vielzahl von Signalqualitätsparametern mit unterschiedlichen ersten Referenzsignalressourcen korrespondieren und eine erste Referenzsignalressource, die mit einem gewissen Signalqualitätsparameter korrespondiert, eine zweite Referenzsignalressource ist, die mit einem anderen Signalqualitätsparameter korrespondiert.

**3.** Verfahren gemäß Anspruch 1, das ferner Folgendes beinhaltet:
Bestimmen (S103) eines Messergebnisses des Zielsignalqualitätsparameters auf der Basis des Signalparameters und des ersten Interferenzparameters.

**4.** Verfahren gemäß Anspruch 3, wobei das Bestimmen (S103) des Messergebnisses des Zielsignalqualitätsparameters auf der Basis des Signalparameters und des ersten Interferenzparameters Folgendes beinhaltet:

Bestimmen eines Verhältnisses des Signalparameters zu dem ersten Interferenzparameter als das Messergebnis des Zielsignalqualitätsparameters, wobei der Signalparameter auf der Basis einer Empfangsleistung oder von Empfangsleistungen der mindestens einen ersten Referenzsignalressource bestimmt wird und der erste Interferenzparameter auf der Basis einer Empfangsleistung oder von Empfangsleistungen der mindestens einen zweiten Referenzsignalressource bestimmt wird.

5. Verfahren gemäß Anspruch 3, das ferner Folgendes beinhaltet:

Empfangen (S104) eines zweiten Referenzsignalressourcensatzes, wobei eine Referenzsignalressource in dem zweiten Referenzsignalressourcensatz dazu genutzt wird, eine Interferenz zu messen; und
Messen (S105) eines zweiten Interferenzparameters in dem Zielsignalqualitätsparameter auf der Basis einer Referenzsignalressource, die mit der mindestens einen ersten Referenzsignalressource in dem zweiten Referenzsignalressourcensatz korrespondiert, wobei
das Bestimmen (S103) eines Messergebnisses des Zielsignalqualitätsparameters auf der Basis des Signalparameters und des ersten Interferenzparameters Folgendes beinhaltet: Bestimmen des Messergebnisses des Zielsignalqualitätsparameters auf der Basis des Signalparameters, des ersten Interferenzparameters und des zweiten Interferenzparameters.

6. Verfahren gemäß einem der Ansprüche 1 bis 5, das ferner Folgendes beinhaltet:

Auswählen mindestens eines Signalqualitätsparameters, dessen Messergebnis bzw. Messergebnisse eine vorgegebene Bedingung aus der Vielzahl von Zielsignalqualitätsparametern erfüllt bzw. erfüllen; und
Melden mindestens eines von Folgendem: dem Messergebnis oder den Messergebnissen des mindestens einen Signalqualitätsparameters, einem Index oder Indizes der mindestens einen ersten Referenzsignalressource, die mit dem mindestens einen Signalqualitätsparameter korrespondiert, und einem Signalparameter oder Signalparametern der mindestens einen ersten Referenzsignalressource, die mit dem mindestens einen Signalqualitätsparameter korrespondiert.

7. Verfahren gemäß einem der Ansprüche 1 bis 5, wobei
die Referenzsignalressource einen Synchronisationssignalblock, SSB, oder ein Kanalzustandsinformations-Referenzsignal, CSI-RS, beinhaltet.

8. Ein Verfahren zum Messen von Signalqualitätsparametern, das von einer Netzvorrichtung durchgeführt wird und Folgendes beinhaltet:

Senden (S401) eines ersten Referenzsignalressourcensatzes, der dazu genutzt wird, eine Vielzahl von Signalqualitätsparametern zu messen, wobei mindestens eine erste Referenzsignalressource dazu genutzt wird, einen Signalparameter in einem Zielsignalqualitätsparameter zu messen, mindestens eine zweite Referenzsignalressource dazu genutzt wird, einen ersten Interferenzparameter in dem Zielsignalqualitätsparameter zu messen, der Zielsignalqualitätsparameter ein beliebiger der Vielzahl von Signalqualitätsparametern ist, die erste Referenzsignalressource eine Referenzsignalressource ist, die mit dem Zielsignalqualitätsparameter in dem ersten Referenzsignalressourcensatz korrespondiert, und die zweite Referenzsignalressource eine Referenzsignalressource in dem ersten Referenzsignalressourcensatz ist, die nicht die erste Referenzsignalressource ist; wobei das Verfahren ferner Folgendes beinhaltet:

Konfigurieren eines Werts einer Wiederholung, wobei der Wert in Konfigurationsinformationen beinhaltet ist, die dazu genutzt werden, den ersten Referenzsignalressourcensatz zu konfigurieren; wobei,
wenn der Wert aus ist, die mindestens eine erste Referenzsignalressource dazu genutzt wird, den Signalparameter in dem Zielsignalqualitätsparameter zu messen, und die mindestens eine zweite Referenzsignalressource dazu genutzt wird, den ersten Interferenzparameter in dem Zielsignalqualitätsparameter zu messen.

9. Verfahren gemäß Anspruch 8, wobei
unterschiedliche Signalqualitätsparameter in der Vielzahl von Signalqualitätsparametern mit unterschiedlichen ersten Referenzsignalressourcen korrespondieren und eine erste Referenzsignalressource, die mit einem gewissen Signalqualitätsparameter korrespondiert, eine zweite Referenzsignalressource ist, die mit einem anderen Signalqualitätsparameter korrespondiert.

10. Verfahren gemäß Anspruch 8 oder 9, das ferner Folgendes beinhaltet:

Empfangen mindestens eines von Folgendem: einem Messergebnis oder Messergebnissen mindestens eines Signalqualitätsparameters, einem Index oder Indizes des mindestens einen Signalqualitätsparameters, der mit der mindestens einen ersten Referenzsignalressource korrespondiert, und einem Signalparameter oder Signalparametern des mindestens einen Signalqualitätsparameters, der mit der mindestens einen ersten Referenzsignalressource korrespondiert, wobei
der mindestens eine Signalqualitätsparameter ein Signalqualitätsparameter ist, dessen Messergebnis bzw. Messergebnisse eine vorgegebene Bedingung in der Vielzahl von Zielsignalqualitätsparametern erfüllt bzw. erfüllen.

11. Eine Endgerätvorrichtung (600), die Folgendes beinhaltet:

ein erstes Empfangsmodul (601), das dazu konfiguriert ist, einen ersten Referenzsignalressourcensatz zu empfangen, der dazu genutzt wird, eine Vielzahl von Signalqualitätsparametern zu messen; und
ein erstes Messmodul (602), das zu Folgendem konfiguriert ist: Messen eines Signalparameters in einem Zielsignalqualitätsparameter auf der Basis mindestens einer ersten Referenzsignalressource und Messen eines ersten Interferenzparameters in dem Zielsignalqualitätsparameter auf der Basis mindestens einer zweiten Referenzsignalressource, wobei
der Zielsignalqualitätsparameter ein beliebiger der Vielzahl von Signalqualitätsparametern ist, die erste Referenzsignalressource eine Referenzsignalressource ist, die mit dem Zielsignalqualitätsparameter in dem ersten Referenzsignalressourcensatz korrespondiert, und die zweite Referenzsignalressource eine Referenzsignalressource in dem ersten Referenzsignalressourcensatz ist, die nicht die erste Referenzsignalressource ist;
wobei die Endgerätvorrichtung (600) ferner Folgendes beinhaltet:

ein zweites Bestimmungsmodul, das dazu konfiguriert ist, einen Wert einer Wiederholung zu bestimmen, wobei der Wert in Konfigurationsinformationen beinhaltet ist, die dazu genutzt werden, den ersten Referenzsignalressourcensatz zu konfigurieren; wobei,
wenn der Wert aus ist, der Signalparameter in dem Zielsignalqualitätsparameter auf der Basis der mindestens einen ersten Referenzsignalressource gemessen wird und der erste Interferenzparameter in dem Zielsignalqualitätsparameter auf der Basis der mindestens einen zweiten Referenzsignalressource gemessen wird.

12. Endgerätvorrichtung (600) gemäß Anspruch 11, wobei unterschiedliche Signalqualitätsparameter in der Vielzahl von Signalqualitätsparametern mit unterschiedlichen ersten Referenzsignalressourcen korrespondieren und eine erste Referenzsignalressource, die mit einem gewissen Signalqualitätsparameter korrespondiert, eine zweite Referenzsignalressource ist, die mit einem anderen Signalqualitätsparameter korrespondiert.

13. Endgerätvorrichtung (600) gemäß Anspruch 11, die ferner Folgendes beinhaltet:
ein erstes Bestimmungsmodul (603), das dazu konfiguriert ist, ein Messergebnis des Zielsignalqualitätsparameters auf der Basis des Signalparameters und des ersten Interferenzparameters zu bestimmen.

14. Eine Netzvorrichtung (900), die Folgendes beinhaltet:

ein erstes Sendemodul (901), das dazu konfiguriert ist, einen ersten Referenzsignalressourcensatz zu senden, der dazu genutzt wird, eine Vielzahl von Signalqualitätsparametern zu messen, wobei
mindestens eine erste Referenzsignalressource dazu genutzt wird, einen Signalparameter in einem Zielsignalqualitätsparameter zu messen, mindestens eine zweite Referenzsignalressource dazu genutzt wird, einen ersten Interferenzparameter in dem Zielsignalqualitätsparameter zu messen, der Zielsignalqualitätsparameter ein beliebiger der Vielzahl von Signalqualitätsparametern ist, die erste Referenzsignalressource eine Referenzsignalressource ist, die mit dem Zielsignalqualitätsparameter in dem ersten Referenzsignalressourcensatz korrespondiert, und die zweite Referenzsignalressource eine Referenzsignalressource in dem ersten Referenzsignalressourcensatz ist, die nicht die erste Referenzsignalressource ist;
wobei die Netzvorrichtung (900) ferner Folgendes beinhaltet:
ein Konfigurationsmodul, das dazu konfiguriert ist, einen Wert einer Wiederholung zu konfigurieren, wobei der Wert in Konfigurationsinformationen beinhaltet ist, die dazu genutzt werden, den ersten Referenzsignalressourcensatz zu konfigurieren; wobei, wenn der Wert aus ist, die mindestens eine erste Referenzsignalressource dazu genutzt wird, den Signalparameter in dem Zielsignalqualitätsparameter zu messen, und die mindestens eine zweite Referenzsignalressource dazu genutzt wird, den ersten Interferenzparameter in dem Zielsignalqualitätsparameter zu messen.

15. Netzvorrichtung (900) gemäß Anspruch 14, wobei unterschiedliche Signalqualitätsparameter in der Vielzahl von Signalqualitätsparametern mit unterschiedlichen ersten Referenzsignalressourcen korrespondieren und eine erste Referenzsignalressource, die mit einem gewissen Signalqualitätsparameter korrespondiert, eine zweite Referenzsignalressource ist, die mit einem anderen Signalqualitätsparameter korrespondiert.

**Revendications**

1. Un procédé pour mesurer des paramètres de qualité de signal, réalisé par un dispositif terminal, et comprenant :

la réception (S101) d'un premier ensemble de ressources de signal de référence utilisé pour mesurer une pluralité de paramètres de qualité de signal ; et
la mesure (S102) d'un paramètre de signal dans un paramètre de qualité de signal cible sur la base d'au moins une première ressource de signal de référence, et la mesure (S102) d'un premier paramètre d'interférence dans le paramètre de qualité de signal cible sur la base d'au moins une deuxième ressource de signal de référence, où le paramètre de qualité de signal cible est l'un quelconque de la pluralité de paramètres de qualité de signal, la première ressource de signal de référence est une ressource de signal de référence correspondant au paramètre de qualité de signal cible dans le premier ensemble de ressources de signal de référence, et la deuxième ressource de signal de référence est une ressource de signal de référence dans le premier ensemble de ressources de signal de référence autre que la première ressource de signal de référence ;
où le procédé comprend en outre :

la détermination d'une valeur d'une répétition, où la valeur est comprise dans des informations de configuration utilisées pour configurer le premier ensemble de ressources de signal de référence ; où lorsque la valeur est « off » (désactivée), le paramètre de signal dans le paramètre de qualité de signal cible est mesuré sur la base de l'au moins une première ressource de signal de référence, et le premier paramètre d'interférence dans le paramètre de qualité de signal cible est mesuré sur la base de l'au moins une deuxième ressource de signal de référence.

2. Le procédé selon la revendication 1, où différents paramètres de qualité de signal dans la pluralité de paramètres de qualité de signal correspondent à différentes premières ressources de signal de référence, et une première ressource de signal de référence correspondant à un paramètre de qualité de signal est une deuxième ressource de signal de référence correspondant à un autre paramètre de qualité de signal.

3. Le procédé selon la revendication 1, comprenant en outre :
la détermination (S103) d'un résultat de mesure du paramètre de qualité de signal cible sur la base du paramètre de signal et du premier paramètre d'interférence.

4. Le procédé selon la revendication 3, où la détermination (S103) du résultat de mesure du paramètre de qualité de signal cible sur la base du paramètre de signal et du premier paramètre d'interférence comprend :
la détermination d'un rapport du paramètre de signal sur le premier paramètre d'interférence en tant que résultat de mesure du paramètre de qualité de signal cible, où le paramètre de signal est déterminé sur la base d'une puissance reçue ou de puissances reçues de l'au moins une première ressource de signal de référence, et le premier paramètre d'interférence est déterminé sur la base d'une puissance reçue ou de puissances reçues de l'au moins une deuxième ressource de signal de référence.

5. Le procédé selon la revendication 3, comprenant en outre :

la réception (S104) d'un deuxième ensemble de ressources de signal de référence, où une ressource de signal de référence dans le deuxième ensemble de ressources de signal de référence est utilisée pour mesurer une interférence ; et
la mesure (S105) d'un deuxième paramètre d'interférence dans le paramètre de qualité de signal cible sur la base d'une ressource de signal de référence correspondant à l'au moins une première ressource de signal de référence dans le deuxième ensemble de ressources de signal de référence, où
la détermination (S103) d'un résultat de mesure du paramètre de qualité de signal cible sur la base du paramètre

**25**

de signal et du premier paramètre d'interférence comprend : la détermination du résultat de mesure du paramètre de qualité de signal cible sur la base du paramètre de signal, du premier paramètre d'interférence, et du deuxième paramètre d'interférence.

6. Le procédé selon l'une quelconque des revendications 1 à 5, comprenant en outre :

la sélection d'au moins un paramètre de qualité de signal dont le résultat de mesure ou les résultats de mesure satisfait ou satisfont une condition prédéfinie parmi la pluralité de paramètres de qualité de signal cibles ; et le rapport d'au moins un élément parmi : le résultat de mesure ou les résultats de mesure de l'au moins un paramètre de qualité de signal, un index ou des index de l'au moins une première ressource de signal de référence correspondant à l'au moins un paramètre de qualité de signal, et un paramètre de signal ou des paramètres de signal de l'au moins une première ressource de signal de référence correspondant à l'au moins un paramètre de qualité de signal.

7. Le procédé selon l'une quelconque des revendications 1 à 5, où la ressource de signal de référence comprend un bloc de signaux de synchronisation, SSB (*Synchronization Signal Block*), ou un signal de référence d'informations sur l'état du canal, CSI-RS (*Channel State Information Reference Signal*).

8. Un procédé pour mesurer des paramètres de qualité de signal, réalisé par un dispositif de réseau, et comprenant :

l'envoi (S401) d'un premier ensemble de ressources de signal de référence utilisé pour mesurer une pluralité de paramètres de qualité de signal, où au moins une première ressource de signal de référence est utilisée pour mesurer un paramètre de signal dans un paramètre de qualité de signal cible, au moins une deuxième ressource de signal de référence est utilisée pour mesurer un premier paramètre d'interférence dans le paramètre de qualité de signal cible, le paramètre de qualité de signal cible est l'un quelconque de la pluralité de paramètres de qualité de signal, la première ressource de signal de référence est une ressource de signal de référence correspondant au paramètre de qualité de signal cible dans le premier ensemble de ressources de signal de référence, et la deuxième ressource de signal de référence est une ressource de signal de référence dans le premier ensemble de ressources de signal de référence autre que la première ressource de signal de référence ; où le procédé comprend en outre :

la configuration d'une valeur d'une répétition, où la valeur est comprise dans des informations de configuration utilisées pour configurer le premier ensemble de ressources de signal de référence ; où lorsque la valeur est « off », l'au moins une première ressource de signal de référence est utilisée pour mesurer le paramètre de signal dans le paramètre de qualité de signal cible, et l'au moins une deuxième ressource de signal de référence est utilisée pour mesurer le premier paramètre d'interférence dans le paramètre de qualité de signal cible.

9. Le procédé selon la revendication 8, où différents paramètres de qualité de signal dans la pluralité de paramètres de qualité de signal correspondent à différentes premières ressources de signal de référence, et une première ressource de signal de référence correspondant à un paramètre de qualité de signal est une deuxième ressource de signal de référence correspondant à un autre paramètre de qualité de signal.

10. Le procédé selon la revendication 8 ou 9, comprenant en outre :

la réception d'au moins un élément parmi : un résultat de mesure ou des résultats de mesure d'au moins un paramètre de qualité de signal, un index ou des index de l'au moins un paramètre de qualité de signal correspondant à l'au moins une première ressource de signal de référence, et un paramètre de signal ou des paramètres de signal de l'au moins un paramètre de qualité de signal correspondant à l'au moins une première ressource de signal de référence, où l'au moins un paramètre de qualité de signal est un paramètre de qualité de signal dont le résultat de mesure ou les résultats de mesure satisfait ou satisfont une condition prédéfinie dans la pluralité de paramètres de qualité de signal cibles.

11. Un dispositif terminal (600), comprenant :

un premier module de réception (601), configuré pour recevoir un premier ensemble de ressources de signal de référence utilisé pour mesurer une pluralité de paramètres de qualité de signal ; et

un premier module de mesure (602), configuré pour : mesurer un paramètre de signal dans un paramètre de qualité de signal cible sur la base d'au moins une première ressource de signal de référence, et mesurer un premier paramètre d'interférence dans le paramètre de qualité de signal cible sur la base d'au moins une deuxième ressource de signal de référence, où

le paramètre de qualité de signal cible est l'un quelconque de la pluralité de paramètres de qualité de signal, la première ressource de signal de référence est une ressource de signal de référence correspondant au paramètre de qualité de signal cible dans le premier ensemble de ressources de signal de référence, et la deuxième ressource de signal de référence est une ressource de signal de référence dans le premier ensemble de ressources de signal de référence autre que la première ressource de signal de référence ;

où le dispositif terminal (600) comprend en outre :

un deuxième module de détermination, configuré pour déterminer une valeur d'une répétition, où la valeur est comprise dans des informations de configuration utilisées pour configurer le premier ensemble de ressources de signal de référence ; où lorsque la valeur est « off », le paramètre de signal dans le paramètre de qualité de signal cible est mesuré sur la base de l'au moins une première ressource de signal de référence, et le premier paramètre d'interférence dans le paramètre de qualité de signal cible est mesuré sur la base de l'au moins une deuxième ressource de signal de référence.

12. Le dispositif terminal (600) selon la revendication 11, où différents paramètres de qualité de signal dans la pluralité de paramètres de qualité de signal correspondent à différentes premières ressources de signal de référence, et une première ressource de signal de référence correspondant à un paramètre de qualité de signal est une deuxième ressource de signal de référence correspondant à un autre paramètre de qualité de signal.

13. Le dispositif terminal (600) selon la revendication 11, comprenant en outre :
un premier module de détermination (603), configuré pour déterminer un résultat de mesure du paramètre de qualité de signal cible sur la base du paramètre de signal et du premier paramètre d'interférence.

14. Un dispositif de réseau (900), comprenant :

un premier module d'envoi (901), configuré pour envoyer un premier ensemble de ressources de signal de référence utilisé pour mesurer une pluralité de paramètres de qualité de signal, où

au moins une première ressource de signal de référence est utilisée pour mesurer un paramètre de signal dans un paramètre de qualité de signal cible, au moins une deuxième ressource de signal de référence est utilisée pour mesurer un premier paramètre d'interférence dans le paramètre de qualité de signal cible, le paramètre de qualité de signal cible est l'un quelconque de la pluralité de paramètres de qualité de signal, la première ressource de signal de référence est une ressource de signal de référence correspondant au paramètre de qualité de signal cible dans le premier ensemble de ressources de signal de référence, et la deuxième ressource de signal de référence est une ressource de signal de référence dans le premier ensemble de ressources de signal de référence autre que la première ressource de signal de référence ;

où le dispositif de réseau (900) comprend en outre :

un module de configuration, configuré pour configurer une valeur d'une répétition, où la valeur est comprise dans des informations de configuration utilisées pour configurer le premier ensemble de ressources de signal de référence ; où

lorsque la valeur est « off », l'au moins une première ressource de signal de référence est utilisée pour mesurer le paramètre de signal dans le paramètre de qualité de signal cible, et l'au moins une deuxième ressource de signal de référence est utilisée pour mesurer le premier paramètre d'interférence dans le paramètre de qualité de signal cible.

15. Le dispositif de réseau (900) selon la revendication 14, où différents paramètres de qualité de signal dans la pluralité de paramètres de qualité de signal correspondent à différentes premières ressources de signal de référence, et une première ressource de signal de référence correspondant à un paramètre de qualité de signal est une deuxième ressource de signal de référence correspondant à un autre paramètre de qualité de signal.

Receive a first reference signal resource set used to measure a plurality of signal quality parameters — S101

↓

Measure a signal parameter in a target signal quality parameter based on at least one first reference signal resource, and measure a first interference parameter in the target signal quality parameter based on at least one second reference signal resource, where the target signal quality parameter is any one of the plurality of signal quality parameters, the first reference signal resource is a reference signal resource corresponding to the target signal quality parameter in the first reference signal resource set, and the second reference signal resource is a reference signal resource in the first reference signal resource set other than the first reference signal resource — S102

FIG. 1

Receive a first reference signal resource set used to measure a plurality of signal quality parameters — S101

↓

Measure a signal parameter in a target signal quality parameter based on at least one first reference signal resource, and measure a first interference parameter in the target signal quality parameter based on at least one second reference signal resource, where the target signal quality parameter is any one of the plurality of signal quality parameters, the first reference signal resource is a reference signal resource corresponding to the target signal quality parameter in the first reference signal resource set, and the second reference signal resource is a reference signal resource in the first reference signal resource set other than the first reference signal resource — S102

↓

Determine a measurement result of the target signal quality parameter based on the signal parameter and the first interference parameter — S103

FIG. 2

Receive a first reference signal resource set used to measure a plurality of signal quality parameters — S101

↓

Measure a signal parameter in a target signal quality parameter based on at least one first reference signal resource, and measure a first interference parameter in the target signal quality parameter based on at least one second reference signal resource, where the target signal quality parameter is any one of the plurality of signal quality parameters, the first reference signal resource is a reference signal resource corresponding to the target signal quality parameter in the first reference signal resource set, and the second reference signal resource is a reference signal resource in the first reference signal resource set other than the first reference signal resource — S102

↓

Receive a second reference signal resource set, where a reference signal resource in the second reference signal resource set is used to measure interference — S104

↓

Measure a second interference parameter in the target signal quality parameter based on a reference signal resource corresponding to the at least one first reference signal resource in the second reference signal resource set — S105

↓

Determine a measurement result of the target signal quality parameter based on the signal parameter and the second interference parameter — S103

FIG. 3

Send a first reference signal resource set used to measure a plurality of signal quality parameters — S401

FIG. 4

Send a first reference signal resource set used to measure a
plurality of signal quality parameters — S401

Send a second reference signal resource set, where a reference
signal resource in the second reference signal resource set is
used to measure interference — S402

FIG. 5

Terminal device 600

First receiving module
601

First measurement
module 602

FIG. 6

Terminal device 600

First receiving module
601

First measurement
module 602

First determining module
603

FIG. 7

Terminal device 600

First receiving module
601

First measurement
module 602

Second receiving module
604

Second measurement
module 605

First determining module
603

FIG. 8

Network device 900

First sending module 901

FIG. 9

Network device 900

First sending module 901

Second sending module
902

FIG. 10

1100

Terminal device

1101

Processor

1102

Memory

1105

Operating
system

11021

User
interface

Network
interface

Application

11022

1103          1104

FIG. 11

1200

Network device

1201

Processor

Bus interface

Transceiver

1202

1203

Memory

User
interface

1204

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201811303176
- US 2017331609 A1
- EP 3276849 A1
- EP 3276851 A1